# EUROPEAN PATENT APPLICATION

(11) **EP 4 835 893 A1**
(43) Date of publication of application: **04.11.2026**
(21) Application number: 26173818.1
(22) Date of filing: 21.04.2026
(51) Int. Cl.: G11B 27/036, H04N 21/44, H04N 21/439

(54) **NEAR REAL-TIME ARTIFICIAL INTELLIGENCE (AI) ENHANCEMENT OF VIDEO OR AUGMENTED REALITY (AR) PRESENTATIONS OF LIVE EVENTS**

(30) Priority: 29.04.2025 US 202519193093
(71) Applicant: Microsoft Technology Licensing, LLC, Redmond, WA 98052 (US)
(72) Inventor: CALLAGHAN, David, Redmond, Washington, 98052 (US); KUMAR, Dinesh, Redmond, Washington, 98052 (US)
(74) Representative: CMS Cameron McKenna Nabarro Olswang LLP

(57) **Abstract**

Systems and methods are provided for implementing near-real-time artificial intelligence ("AI") enhancement of video or augmented reality ("AR") presentations of live events. In examples, a computing system identifies, from a plurality of spoken words in a live audio recording of individuals speaking, spoken words to modify, based on a set of parameters and/or a profile of a user, using an AI agent. The computing system causes a generative AI system to modify, in near-real-time, (a) the identified spoken words with corresponding replacement words in each of the live video recording and the corresponding live audio recording, based on the profile of the user; (b) portions of the live video recording and the corresponding live audio recording to generate video and audio smooth transitions before and after the replacement words are incorporated in the live video recording and the corresponding live audio recording, respectively.

## Description

### BACKGROUND

During situations in which speakers are presenting, lecturing, or otherwise performing for a live audience or a viewing audience, the speakers may be prone to using filler words, personalized words or phrases, colloquial terms, etc. For recordings of these presentations, lectures, or performances, existing approaches are based on an "exact copy" model that captures audio and video as accurately and with the highest fidelity possible, which in practice means that the filler words, personalized words or phrases, colloquial terms, etc. are incorporated as part of the recordings and require use of specialized tools needing skilled technicians to remove. It is with respect to this general technical environment to which aspects of the present disclosure are directed. In addition, although relatively specific problems have been discussed, it should be understood that the examples should not be limited to solving the specific problems identified in the background.

### SUMMARY

This summary is provided to introduce a selection of concepts in a simplified form that are further described below in the detailed description section. This summary is not intended to identify key features or essential features of the claimed subject matter, nor is it intended as an aid in determining the scope of the claimed subject matter.

The currently disclosed technology, among other things, provides for post-production artificial intelligence ("AI") enhancement of video presentations based on script modification as well as near-real-time AI enhancement of video or augmented reality ("AR") presentations of live events. In the post-production implementation, a computing system identifies one or more spoken words to modify, from a plurality of spoken words in an audio file of individuals speaking, based on a set of parameters and/or a profile of an intended audience, in some cases, using an AI agent. If there is a script or transcript for the audio file, the computing system causes a generative AI system to modify the script or transcript to replace the identified one or more spoken words with one or more replacement words, and to modify corresponding portions of the audio file to replace the identified one or more spoken words with the one or more replacement words based on the modified script or transcript. The computing system further causes the generative AI system to generate audio transitions before and after the one or more replacement words, and to modify the applicable portions of a corresponding video file based on the modified audio file, resulting in enhanced video and audio files, which are subsequently presented to an intended audience.

In the near-real-time implementation, the computing system identifies one or more spoken words to modify, from a plurality of spoken words in a live audio recording of individuals speaking, based on a set of parameters and/or a profile of a user, in some cases, using the AI agent. The computing system causes the generative AI system to modify, in near-real-time, (a) the identified one or more spoken words with corresponding one or more replacement words in each of the live video recording and the corresponding live audio recording, based on the profile of the user; (b) portions of the live video recording and the corresponding live audio recording to generate video and audio smooth transitions before and after the one or more replacement words are incorporated in the live video recording and the corresponding live audio recording, respectively. The modified video recording and corresponding modified audio recording are presented, in near-real-time, to the user.

The details of one or more aspects are set forth in the accompanying drawings and description below. Other features and advantages will be apparent from a reading of the following detailed description and a review of the associated drawings. It is to be understood that the following detailed description is explanatory only and is not restrictive of the invention as claimed.

### BRIEF DESCRIPTION OF THE DRAWINGS

A further understanding of the nature and advantages of particular embodiments may be realized by reference to the remaining portions of the specification and the drawings, which are incorporated in and constitute a part of this disclosure.
Fig. 1 depicts an example system for implementing post-production AI enhancement of video presentations based on script modification and/or near-real-time AI enhancement of video or AR presentations of live events.
Fig. 2 depicts an example sequence flow for implementing post-production AI enhancement of video presentations based on script modification.
Fig. 3 depicts an example sequence flow for implementing near-real-time AI enhancement of video or AR presentations of live events.
Figs. 4A-4F depict example methods for implementing post-production AI enhancement of video presentations based on script modification.
Figs. 5A-5E depict example methods for implementing near-real-time AI enhancement of video or AR presentations of live events.
Fig. 6 depicts a block diagram illustrating example physical components of a computing device with which aspects of the technology may be practiced.

### DETAILED DESCRIPTION OF CERTAIN EMBODIMENTS

As briefly discussed above, speakers may be prone to using filler words, personalized words or phrases, colloquial terms, etc. when presenting, lecturing, or otherwise performing for a live audience or a viewing audience. For recordings of these presentations, lectures, or performances, an "exact copy" model is used by existing systems that capture audio and video as accurately and with the highest fidelity possible. In practice, the filler words, personalized words or phrases, colloquial terms, etc. are incorporated as part of the recordings during implementation of the exact copy model, and subsequently requires use of specialized tools needing skilled technicians to remove.

The present technology provides for post-production AI enhancement of video presentations based on script modification and/or near-real-time AI enhancement of video or AR presentations of live events. As used herein, near-real-time refers to within a few seconds (e.g., 1-10 seconds (s) or a delay that is used in modern live broadcasts (also referred to as "live feed buffer") to allow manual adjustments, e.g., filtering out profanities) during which modified streams of presentations, lectures, sporting events, concerts, or other video files or live video recordings are presented. In some cases, present technology filters the filler words, personalized words or phrases, colloquial terms, etc., as well as noises (collectively, "designated portions") out of the audio and video recording so that a script or transcript matches the audio. In examples, AI tools are used to create edited frames from AI models (e.g., a large language model(s) ("LLM(s)")) to modify audio recordings to replace identified spoken words and other designated portions with replacement words or portions (and, for the post-production implementation, based on a script or transcript of the audio that has first been modified with the replacement words or portions). The AI tools are then used to modify the video frames accordingly to match the modified audio, in some cases, to modify the lips of the speaker(s) in the video frames to simulate the speaker(s) speaking the replacement words instead of the original spoken words. In some cases, neural processing units ("NPUs"), graphics processing units ("GPUs"), and/or central processing units ("CPUs") on user devices are used to implement such AI-assisted enhancement of the audio and video. In the manner above, recordings of higher quality can be achieved from post-event viewing as well as for preparing training materials and other use cases.

Various modifications and additions can be made to the embodiments discussed herein without departing from the scope of the disclosed techniques. For example, while the embodiments described above refer to particular features, the scope of the disclosed techniques also includes embodiments having different combinations of features and embodiments that do not include all of the above-described features.

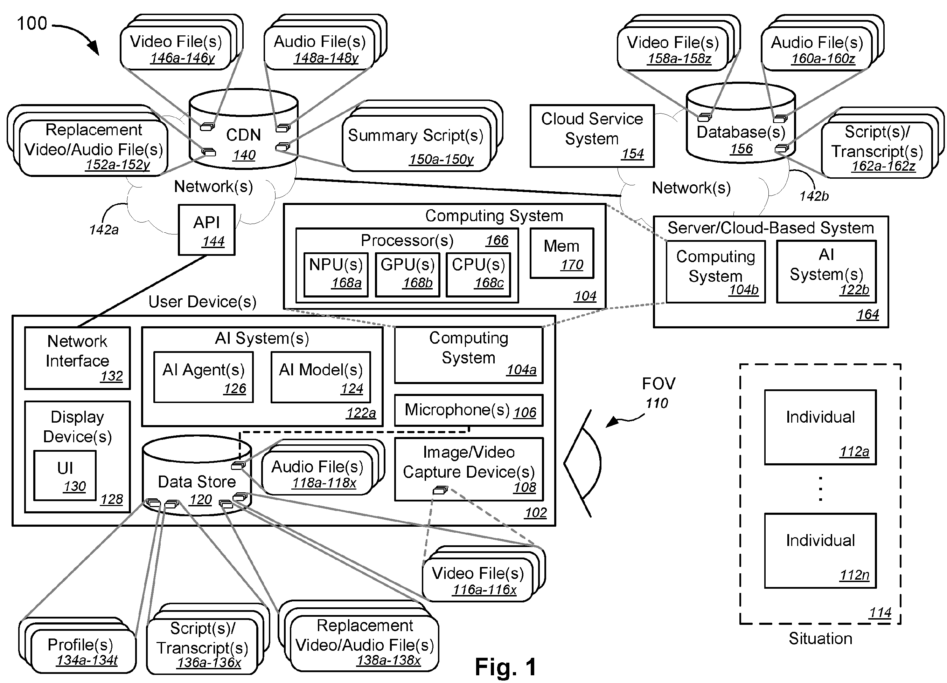

Turning to the embodiments as illustrated by the drawings, Figs. 1-5 illustrate some of the features of methods, systems, and apparatuses for implementing post-production AI enhancement of video presentations based on script modification and/or near-real-time AI enhancement of video or AR presentations of live events, as referred to above. The methods, systems, and apparatuses illustrated by Figs. 1-5 refer to examples of different embodiments that include various components and steps, which can be considered alternatives or which can be used in conjunction with one another in the various embodiments. The description of the illustrated methods, systems, and apparatuses shown in Figs. 1-5 is provided for purposes of illustration and should not be considered to limit the scope of the different embodiments.

Fig. 1 depicts an example system 100 for implementing post-production AI enhancement of video presentations based on script modification and/or near-real-time AI enhancement of video or AR presentations of live events. In some examples, system 100 includes user device(s) 102 including a computing system 104a, a microphone(s) 106, and an image or video capture device(s) 108 (hereinafter, "image capture device(s) 108" or "camera(s) 108"). In some instances, the image capture device(s) 108 has a field of view ("FOV") 110 in which images or videos of one or more individuals 112a-112n (collectively, "individuals 112") may be captured, in some cases, with at least one individual 112 captured while speaking during situation 114. In some examples, the videos captured by the image capture device(s) 108 are converted into one or more video files 116a-116x (collectively, "video files 116") that, in some cases, are subsequently stored in a data store 120. In some instances, the microphone(s) 106 captures voice signals and other audio signals, converts the captured voice signals and the other audio signals into one or more audio files 118a-118n (collectively, "audio files 118") that, in some cases, are similarly subsequently stored in the data store 120. In some examples, the user device(s) 102 includes one of a set of AR eyewear with at least one connected audio output device, a smart phone, a tablet computer, or a video recording device.

In examples, the one or more individuals 112a-112n each includes one of a lecturer, a presenter, a social media influencer, a podcaster (e.g., audio and/or video podcaster), a character in a movie, a character in a television show, a musical artist, a stage actor, an opera singer, an awards show host, an awards show presenter, an awards show recipient, a game show host, a game show presenter, a game show contestant, a cooking show host, a cooking show participant, a cooking show guest, a video game character, a sporting event commentator, a sports team coach, a sports team member, an athlete, a trainer, or a training video participant. In post-production implementations, the situation 114 in which the one or more individuals 112a-112n are speaking while being captured by the camera(s) 108 and the microphone(s) 106 includes a corresponding one of a lecture, a presentation, a social media video, a podcast, a movie, a television show, a concert, a theater play, an opera production, an awards show, a game show, a cooking show, a video game cut scene, a sporting event, or a training video. In real-time or near-real-time implementations, the situation 114 in which the one or more individuals 112a-112n are speaking while being captured by the camera(s) 108 and the microphone(s) 106 includes a corresponding one of a live lecture, a live presentation, a live showing of a social media video, a live presentation of a podcast, a live showing of a movie, a live showing of a television show, a live concert, a live theater play, a live opera production, a live awards show, a live game show, a live cooking show, a live showing of a runtime video game cut scene, a live stream of a cloud-based game, a live sporting event, or a live training video.

In some examples, system 100 further includes an AI system(s) 122a, which includes an AI model(s) 124 and an AI agent(s) 126. As used herein, an AI agent refers to any suitable software system that utilizes artificial intelligence to autonomously perform tasks, pursue goals, and/or make decisions, in some cases based on machine learning using data and/or user feedback. In examples, the AI agent(s) 126 includes an AI system or models, which include single models, multimodal systems, systems of models, chains of models, or other combinations of models that are operable to recognize patterns associated with vulnerabilities (e.g., SQL injection, cross-site scripting, buffer overflows, or other vulnerabilities), trained to analyze data flows through the code to identify potential points that can be exploited and/or where malicious input could be injected, and/or trained to understand the context of code to identify logical errors or insecure practices not readily apparent through simple pattern matching. Pattern recognition, data flow analysis, and contextual understanding contribute to static analysis aspects of the code analysis. In some examples, "model" as used herein broadly includes sub-models, model systems, and/or mixture of experts. In some cases, the AI system may implement at least one of chain of thought, model delegation, and/or reasoning models in addition or alternative to utilizing generative models and/or other machine learning ("ML") models. The term "generative model," as used herein, refers to a ML model employed to generate new content. One type of generative model is a "generative language model," which is a model that can generate new sequences of text given some input. One type of input for a generative language model is a natural language prompt, e.g., a query potentially with some additional context. For instance, a generative language model can be implemented as a neural network, e.g., a long short-term memory-based model, a decoder-based generative language model, etc. Examples of decoder-based generative language models include versions of models such as Generative Pre-trained Transformer ("GPT"), BigScience Large Open-science Open-access Multilingual Language Model ("BLOOM"), Pathways Language Model ("PaLM"), Mistral, Gemini, and/or Large Language Model Meta AI ("LLaMA"). Generative language models can be trained to predict tokens in sequences of textual training data. When employed in inference mode, the output of a generative language model can include new sequences of text that the model generates.

Another type of generative model is a "generative image model," which is a model that generates images or video. For instance, a generative image model can be implemented as a neural network, e.g., a generative image model such as one or more versions of Stable Diffusion, DALL-E, Sora, or GENIE. A generative image model can generate new image or video content using inputs such as a natural language prompt and/or an input image or video. One type of generative image model is a diffusion model, which can add noise to training images and then be trained to remove the added noise to recover the original training images. In inference mode, a diffusion model can generate new images by starting with a noisy image and removing the noise. Note also that generative image models can generate videos, and the term "image" also encompasses two-dimensional and three-dimensional video.

In some cases, a generative model can be multi-modal. For instance, a model may be capable of using various combinations of text, images, video, audio, application states, code, or other modalities as inputs and/or generating combinations of text, images, video, audio, application states, or code or other modalities as outputs. Here, the term "generative language model" further encompasses multi-modal generative models where at least one mode of output includes natural language tokens. Likewise, the term "generative image model" further encompasses multi-modal generative models where at least one mode of output includes images or video. Examples of multi-modal models include certain GPT variants such as GPT-4o, Gemini, Chameleon, etc. Multi-modal models can also include lightweight models such as Phi-3-Vision-128K-Instruct.

In addition, some generative models can include computer vision capabilities. These models are capable of recognizing objects in input images. The term "computer vision model" encompasses multi-modal models such as one or more versions of Contrastive Language-Image Pre-Training ("CLIP") and Bootstrapping Language-Image Pre-Training ("BLIP"). Note the term "computer vision model" also encompasses non-generative models, such as ResNet, Faster-RCNN, etc. The term "vision language model" refers to any multi-modal generative model that can generate text describing images or videos, including CLIP, BLIP, Vision-and-Language Bidirectional Encoder Representations from Transformers ("BERT"), Flamingo, Chameleon, etc.

The term "prompt," as used herein, refers to input provided to a generative model that the generative model uses to generate outputs. A prompt can be provided in various modalities, such as text, image, audio, video, etc. The term "language generation prompt" refers to a prompt to a generative model where the requested output is in the form of natural language. The term "image generation prompt" refers to a prompt to a generative model where the requested output is in the form of an image.

The term "machine learning model" refers to any of a broad range of models that can learn to generate automated user input and/or application output by observing properties of past interactions between users and applications. For instance, a machine learning model could be a neural network, a support vector machine, a decision tree, a clustering algorithm, etc. In some cases, a machine learning model can be trained using labeled training data, a reward function, or other mechanisms, and in other cases, a machine learning model can learn by analyzing data without explicit labels or rewards.

The other ML models include convolutional neural networks ("CNNs"), recurrent neural networks ("RNNs"), deep neural networks ("DNNs"), transformers, and/or long short-term memory networks ("LSTMs"). In examples, the other ML models include multimodal models that are capable of either one or more of text, image, audio, or video as both input and output, or using one or a first combination of text, image, audio, and/or video as input and using another or a second combination of text, image, audio, and/or video as output. Examples of multimodal models include GPT-4 (which can use both text and image as inputs), LLaMA 2 (which allows for image and video inputs), or Gemini (which was designed to process text, images, audio, video, and computer code).

In examples, system 100 further includes a display device(s) 128 and a user interface ("UI") 130 of display device(s) 128, and a network interface 132. In some examples, the user device(s) 102 further includes one or more of the data store 120, the AI system(s) 122a, the display device(s) 128 (in some cases, with UI 130), and/or the network interface 132. In examples, profiles 134a-134t (collectively, "profiles 134") of a speaker(s) (e.g., individual(s) 112a-112n), a user(s) (e.g., a user(s) associated with the user device(s) 102), and/or an intended audience member(s) may be stored in the data store 120. In some examples, the profiles 134 each includes information regarding at least one of age, spoken languages, region of birth, region of residence, ethnicity, cultural background, religion, education level, college major, speech samples and corresponding speech sample metadata of the speaker(s), the user(s), or the intended audience member(s), or video samples and corresponding video sample metadata of the speaker(s), the user(s), or the intended audience member(s). In some instances, one or more scripts or transcripts 136a-136x (collectively, "scripts 136" or "transcripts 136") of video files 116 and/or audio files 118 may similarly be stored in the data store 120. In some cases, one or more replacement video and/or audio files 138a-138x may likewise be stored in the data store 120. The one or more replacement video and/or audio files 138a-138x replace original versions of the one or more video files 116a-116x and the corresponding one or more audio files 118a-118x with video and audio portions that have been modified to replace or remove designated words, verbal pauses having a duration exceeding a threshold duration (e.g., 5, 10, or 15 seconds (s), or greater), background noise, and/or audio feedback.

In some cases, the designated words include at least one of filler words (e.g., "um," "oh," "err," "uh," "like," "you know," "so," "well," "basically," "actually," "hmm," or "alright"), personal words or phrases (e.g., words or phrases pertaining to personal aspects of the individual, coined terms by the individual, and/or personal turns of phrases, such as "dude," "buddy"), colloquial terms (e.g., "gonna," "gimme," "y'all," "ain't," "ballpark," "spill the beans," "bite the bullet," "cost an arm and a leg," "kick the bucket," or "the ball is in your court"), mumbled words, mispronounced words, misused words, misspoken words, offensive words, insensitive words, or inappropriate words. In some instances, the video files 116 and/or the audio files 118 are modified based on at least one of a set of parameters, differences between words in a corresponding script(s) 136 and spoken words in the video files 116 and/or audio files 118, and/or a profile(s) 134 of a user and/or intended audience. In some cases, the set of parameters associated with replacing or removing the designated words are based on the profile of the user and/or intended audience. In some examples, the one or more replacement video and/or audio files 138a-138x include words retrieved from one of an Internet search or a database search of general information regarding a topic of discussion associated with a plurality of spoken words. In some examples, a speaker (e.g., individual 112) who has a speech impediment (e.g., a lisp or a stutter) can use the system to modify recordings (either in post-production or in near-real-time) to correct the video and audio frames to remove or replace signs of the speech impediment for the intended audience. In examples, a profile of the speaker (e.g., the individual 112) can also be compiled or updated to identify speech patterns, speech impediments, and the use of filler words, personal words or phrases, colloquial terms, mumbled words, mispronounced words, misused words, misspoken words, offensive words, insensitive words, and/or inappropriate words, and speech samples and corresponding speech sample metadata of the speaker and/or video samples and corresponding video sample metadata of the speaker in the profile of the speaker can be used to generate video and audio frames of the speaker. In some examples, the one or more replacement video frames include AI-generated or AI-assisted changes in camera angles (e.g., to draw attention away from the speaker to the audience, to presentation slides, and/or video substitutions, or other views or graphics).

In some examples, system 100 further includes a content delivery network ("CDN") 140 in network(s) 142a. In some cases, an API 144 communicatively couples the CDN 140 and the user device(s) 102 via network interface 132. In some instances, the CDN 140 stores at least one of one or more video files 146a-146y (collectively, "video files 146"), one or more audio files 148a-148y (collectively, "audio files 148"), one or more summary scripts 150a-150y (collectively, "summary scripts 150"), and/or one or more replacement video and/or audio files 152a-152y (collectively, "replacement video and/or audio files 152"). In examples, system 100 further includes at least one of cloud service system 154 and/or database(s) 156 in network(s) 142b. In some cases, the database(s) 156 stores at least one of one or more video files 158a-158z (collectively, "video files 158"), one or more audio files 160a-160z, and/or one or more scripts or transcripts 162a-162z (collectively, "scripts 162" or "transcripts 162") of video files 158 and/or audio files 160. In some examples, system 100 further includes a server (e.g., a cloud-based system 164), which may be disposed in network(s) 142b. In examples, networks 142a and 142b (collectively, "network(s) 142") each include at least one of a distributed computing network, such as the Internet, a private network, a commercial network, or a cloud network, and/or the like. In some cases, the server 164 includes a cloud-based computing system 104b and a cloud-based AI system(s) 122b. In examples, computing system 104b of server 164 is similar to, if not identical to, computing system 104a of user device(s) 102. In some examples, each of computing system 104a and 104b (collectively, "computing system 104") includes a processor(s) 166, which includes one or more NPUs 168a, one or more GPUs 168b, and/or one or more CPUs 168c, and memory 170. In some instances, AI system(s) 122b of server 164 is similar to, if not identical to, AI system(s) 122a of user device(s) 102. Herein, *n, t, x, y,* and z are non-negative integer numbers that may be either all the same as each other, all different from each other, or some combination of same and different (e.g., one set of two or more having the same values with the others having different values, a plurality of sets of two or more having the same value with the others having different values).

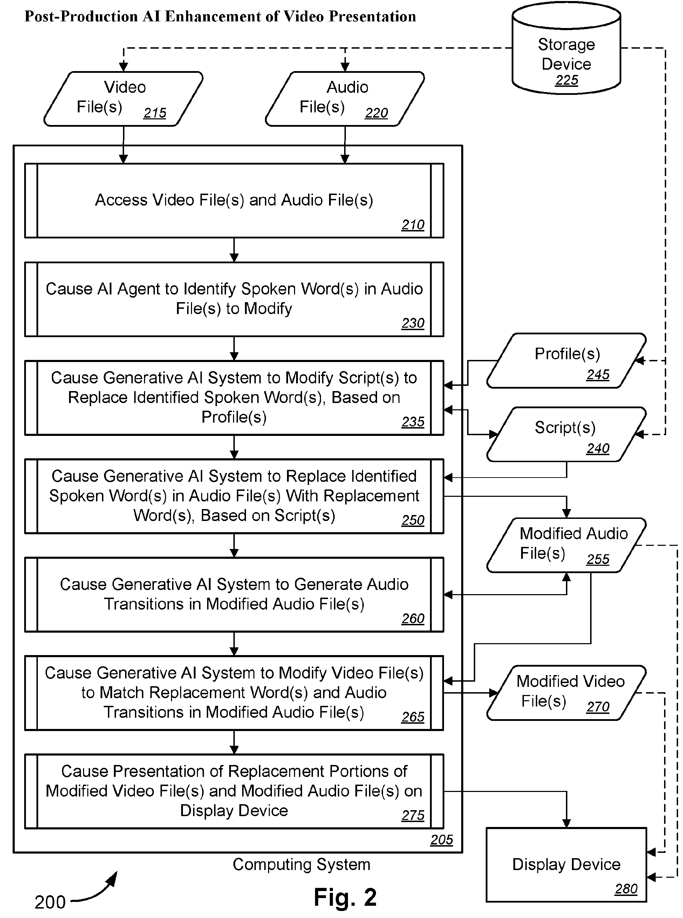

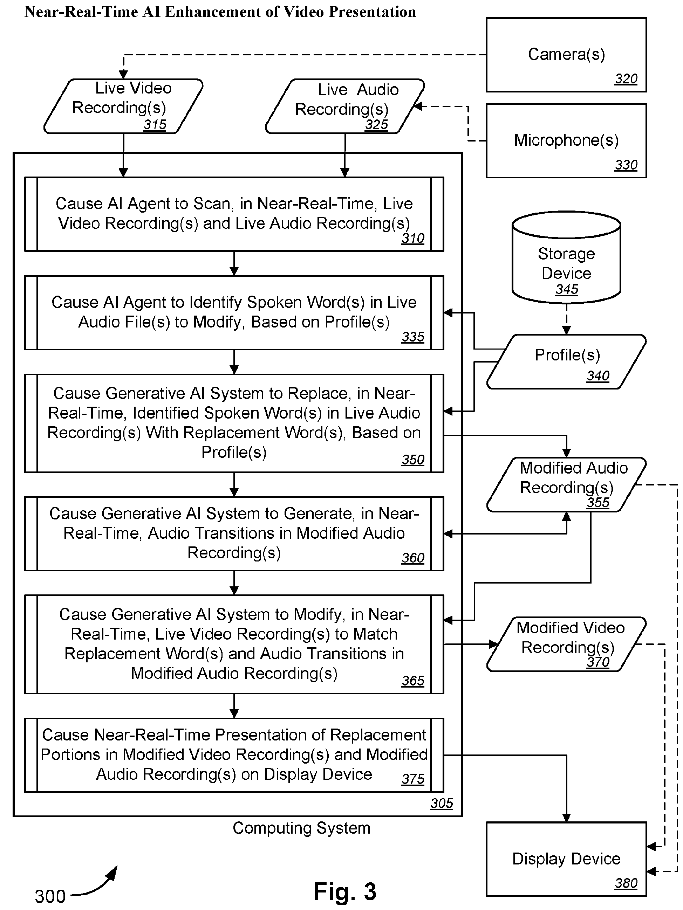

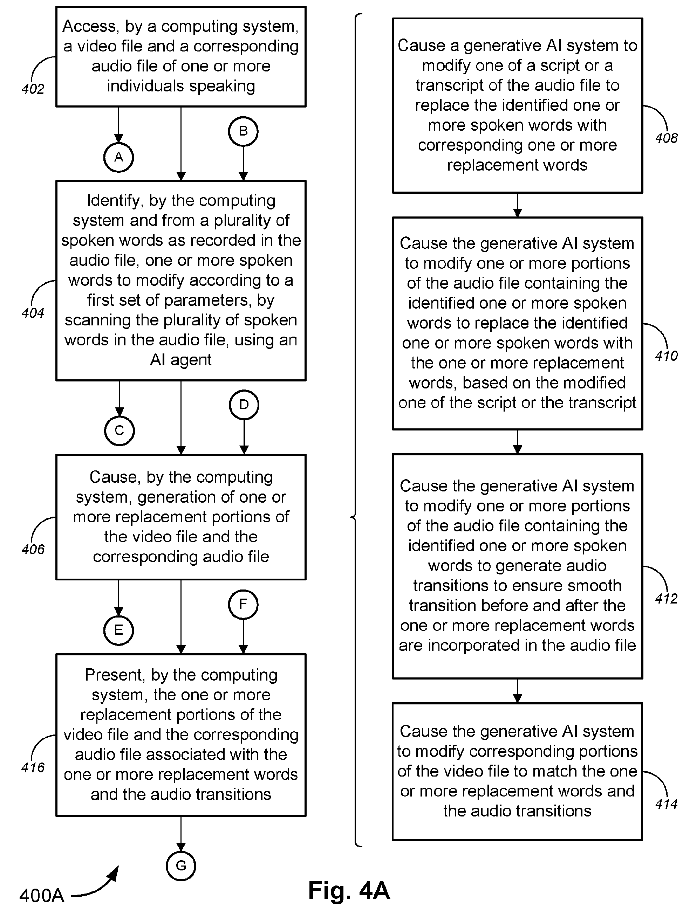

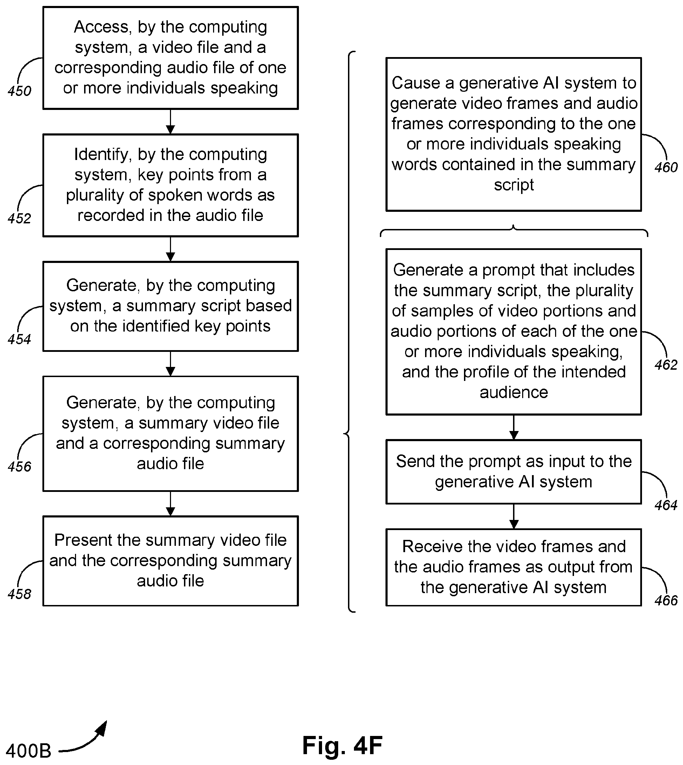

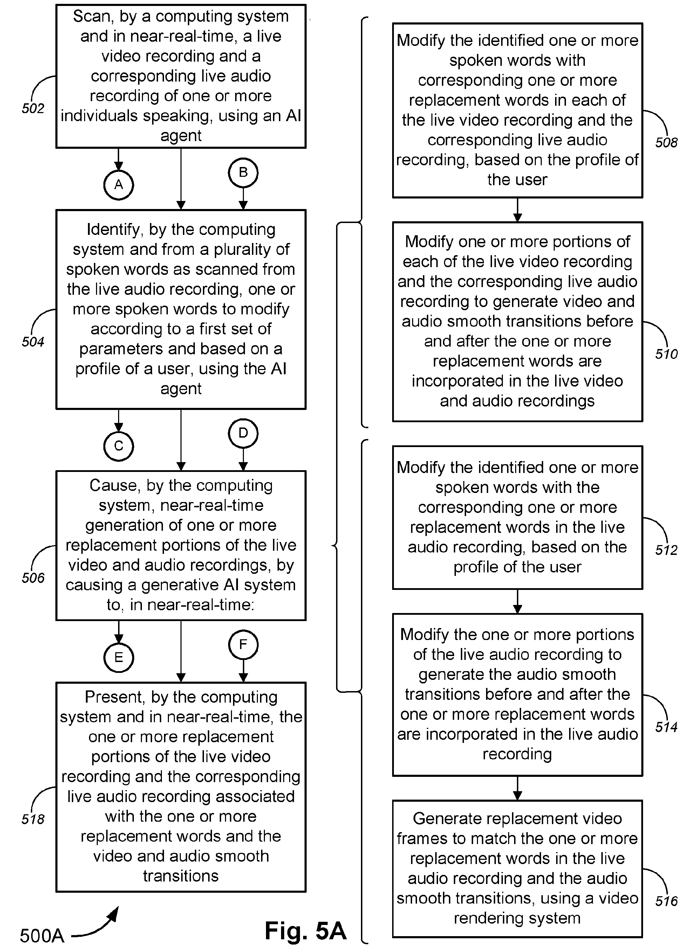

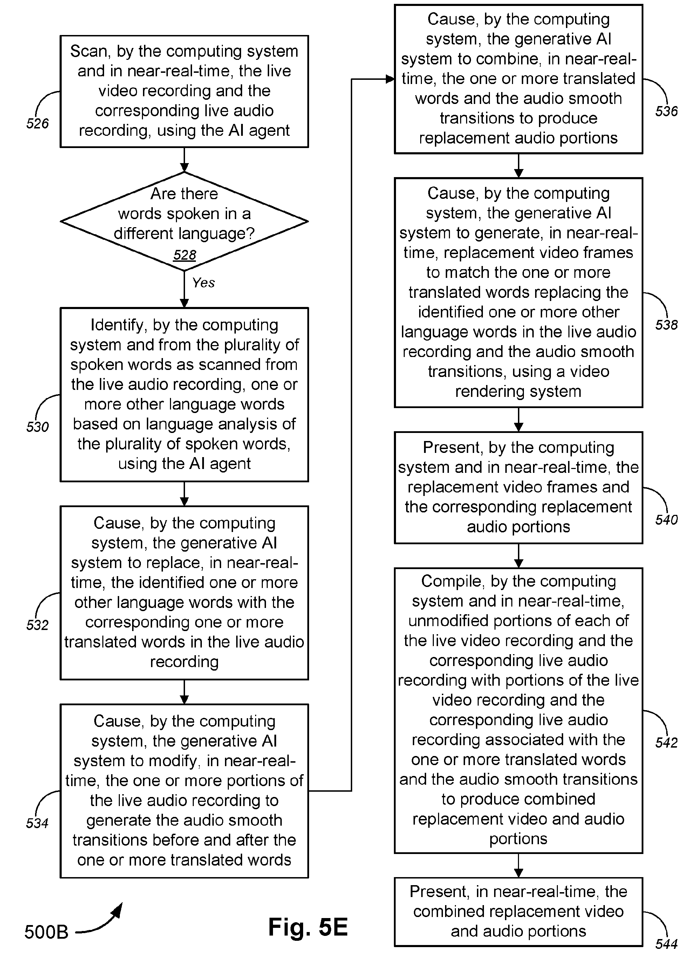

In operation, computing system 104, 104a, and/or 104b and/or AI system(s) 122a or 122b may perform methods for implementing post-production AI enhancement of video presentations based on script modification and/or near-real-time AI enhancement of video or AR presentations of live events, as described in detail with respect to Figs. 2-5E. For example, example sequence flows 200 and 300 as described below with respect to Figs. 2 and 3, and methods 400A, 400B, 500A, and 500B as described below with respect to Figs. 4A-4E, 4F, 5A-5D, and 5E may be applied with respect to the operations of system 100 of Fig. 1.

Fig. 2 depicts an example sequence flow 200 for implementing post-production AI enhancement of video presentations based on script modification. With reference to Fig. 2, the example sequence flow 200 may be performed by a computing system (e.g., computing system 104, 104a, 104b, 205, or 305 of Figs. 1-3).

In the example sequence flow 200 of Fig. 2, a computing system 205, at operation 210, accesses one or more video files 215 and corresponding one or more audio files 220 from a storage device 225 (e.g., datastore 120, CDN 140, and/or database(s) 156 of Fig. 1). In examples, the one or more video files 215 and the corresponding one or more audio files 220 correspond to prior recordings of one of a lecture, a presentation, a social media video, a podcast, a movie, a television show, a concert, a theater play, an opera production, an awards show, a game show, a cooking show, a video game cut scene, a sporting event, or a training video. In examples, the video files 215 and the corresponding audio files 220 include one of a single video file and a corresponding single audio file, multiple video files and corresponding multiple video files, a single video stream of a single video file and a corresponding single audio stream of a single audio file, or multiple video streams and corresponding audio streams of a single video/audio file. At operation 230, the computing system causes an AI agent (e.g., AI agent(s) 126 of Fig. 1) to identify one or more spoken words in the one or more audio files 220 to modify. At operation 235, the computing system 205 causes a generative AI system (e.g., AI system(s) 122a or 122b of Fig. 1) to modify a script(s) 240, which is associated with the one or more audio files 220, to replace the identified one or more spoken words in the one or more audio files 220 with one or more replacement words, based on a profile(s) 245 of an intended audience. At operation 250, the computing system 205 causes the generative AI system to replace the identified one or more spoken words in the one or more audio files 220, based on the modified script(s) 240, thereby producing one or more modified audio files 255. At operation 260, the computing system 205 causes the generative AI system to generate audio transitions in the one or more modified audio files 255. At operation 265, the computing system 205 causes the generative AI system to modify the one or more video files 215 to match the one or more replacement words and audio transitions in the one or more modified audio files 255, thereby producing one or more modified video files 270.

In some examples, the profile(s) 245 of the intended audience includes information regarding at least one of age, spoken languages, region of birth, region of residence, ethnicity, cultural background, religion, education level, college major, speech samples and corresponding speech sample metadata of the user, or video samples and corresponding video sample metadata of the user. In some examples, identifying the one or more spoken words to modify (at operation 230) includes identifying the one or more spoken words to modify by scanning the plurality of transcribed words, according to a first set of parameters and based on the profile of the intended audience. In examples, the first set of parameters include parameters associated with replacing or removing designated words. In some examples, the designated words include at least one of filler words, personal words, personal phrases, colloquial terms, mumbled words, mispronounced words, misused words, misspoken words, offensive words, insensitive words, or inappropriate words. In some cases, the parameters associated with replacing or removing the designated words are based on the profile of the intended audience.

In examples, the one or more replacement words include words retrieved from one of an Internet search or a database search of general information regarding a topic of discussion associated with the plurality of spoken words. In some cases, causing the generative AI system to modify the one or more video files 215 (at operation 265) includes causing the generative AI system to generate replacement video frames to match the one or more replacement words and audio transitions in the one or more modified audio files 255, in some cases, using a video rendering system. At operation 275, the computing system 205 causes presentation of replacement portions of the one or more modified video files 270 and the one or more modified audio files 255 on a display device 280 (e.g., display device(s) 128 of Fig. 1). In examples, the one or more modified video files 270 and/or the one or more modified audio files 255 are stored on local or remote storage (e.g., on storage device 225) for future content consumption (e.g., on-demand stream viewing, broadcast viewing, or downloaded for offline viewing). In some examples, the AI system can be used to verify and/or train AI-based speech-to-text functionality based on analysis of transcripts of the audio compared with existing scripts (if available) and/or analysis of lip motions and/or voice signals of the speaker(s) in the video and audio. Similarly, the AI system can be used to verify and/or train AI-based text-to-speech functionality based on analysis of a modified script and analysis of resultant modified audio of the speaker(s) speaking the replacement words. In some cases, the generative AI system is caused to display text of the one or more replacement words and/or text of the modified script(s) 240 in a closed captioning field(s) that may be displayed.

The processes as described above with respect to operations 210, 230, 235, 250, 260, 265, and 275 of example sequence flow 200 is otherwise similar, if not identical, to the processes as described below with respect to methods 400A and/or 400B of Figs. 4A-4F, or similar to processes as described below with respect to operations 310, 335, 350, 360, 365, and 375 of example sequence flow 300 or the processes as described below with respect to methods 500A and/or 500B of Figs. 5A-5E.

Fig. 3 depicts an example sequence flow 300 for implementing near-real-time AI enhancement of video or AR presentations of live events. Referring to Fig. 3, the example sequence flow 300 may be performed by a computing system (e.g., computing system 104, 104a, 104b, 205, or 305 of Figs. 1-3). In some examples, the computing system includes one of a set of AR eyewear with at least one connected audio output device, a smart phone, a tablet computer, or a video recording device. In some cases, the computing system includes one or more NPUs (e.g., NPU(s) 168a of Fig. 1), one or more GPUs (e.g., GPU(s) 168b of Fig. 1), and/or one or more CPUs (e.g., CPU(s) 168c of Fig. 1), where an AI agent(s) (e.g., AI agent(s) 126 of Fig. 1) is run using the one or more NPUs, the one or more GPUs, and/or the one or more CPUs.

In the example sequence flow 300 of Fig. 3, a computing system 305, at operation 310, causes an AI agent(s) to scan, in near-real-time, one or more live video recordings 315, which are accessible from a camera(s) 320 (e.g., image or video capture device(s) 108 of Fig. 1), and corresponding one or more live audio recordings 325, which are accessible from a storage device 330 (e.g., datastore 120, CDN 140, and/or database(s) 156 of Fig. 1). In examples, the live video recording 315 and the corresponding live audio recording 325 correspond to one of a live lecture, a live presentation, a live showing of a social media video, a live presentation of a podcast, a live showing of a movie, a live showing of a television show, a live concert, a live theater play, a live opera production, a live awards show, a live game show, a live cooking show, a live showing of a runtime video game cut scene, a live stream of a cloud-based game, a live sporting event, or a live training video. In examples, the live video recording 315 and the corresponding live audio recording 325 include one of a single video file and a corresponding single audio file, multiple video files and corresponding multiple video files, a single video stream of a single video recording and a corresponding single audio stream of a single audio recording, or multiple video streams and corresponding audio streams of a single video/audio recording. At operation 330, the computing system causes an AI agent (e.g., AI agent(s) 126 of Fig. 1) to identify one or more spoken words in the one or more live audio recordings 325 to modify, in some cases, based on a profile(s) 340 of a user. In some examples, the profile(s) 340 is accessible from a data storage device 345. In some examples, the one or more spoken words to modify are identified based on differences between a plurality of spoken words as scanned from the one or more live audio recordings 325 with corresponding words contained in the script of the one or more live audio recordings 325, and according to a first set of parameters. In examples, the first set of parameters include parameters associated with replacing or removing designated words. In some examples, the designated words include at least one of filler words, personal words, personal phrases, colloquial terms, mumbled words, mispronounced words, misused words, misspoken words, offensive words, insensitive words, or inappropriate words. In some cases, the parameters associated with replacing or removing the designated words are based on the profile(s) 340 of the user.

At operation 350, the computing system 305 causes a generative AI system (e.g., AI system(s) 122a or 122b of Fig. 1) to replace, in near-real-time, the identified one or more spoken words in the one or more live audio recordings 325 with one or more replacement words, based on the profile(s) 340 of the user, thereby producing one or more modified audio recordings 355. At operation 360, the computing system 305 causes the generative AI system to generate, in near-real-time, audio transitions in the one or more modified audio recordings 355. At operation 365, the computing system 305 causes the generative AI system to modify, in near-real-time, the one or more live video recordings 315 to match the one or more replacement words and audio transitions in the one or more modified audio recordings 355, thereby producing one or more modified video recordings 370. At operation 375, the computing system 305 causes near-real-time presentation of replacement portions of the one or more modified video recordings 370 and the one or more modified audio recordings 355 on a display device 380 (e.g., display device(s) 128 of Fig. 1). In some examples, near-instantaneous or live correction of inaccurate or misleading information by a speaker (e.g., instant fact-checking) may be achieved by using AI systems to search (on the Internet or other data sources) and verify, in near-real-time, information being spoken by the speaker(s). In some cases, the generative AI system is caused to display text of the one or more replacement words in a closed captioning field(s) that may be displayed.

The processes as described above with respect to operations 310, 335, 350, 360, 365, and 375 of example sequence flow 300 is otherwise similar, if not identical, to the processes as described below with respect to methods 500A and/or 500B of Figs. 5A-5E, or similar to processes as described above with respect to operations 210, 230, 235, 250, 260, 265, and 275 of example sequence flow 200 or the processes as described below with respect to methods 400A and/or 400B of Figs. 4A-4F.

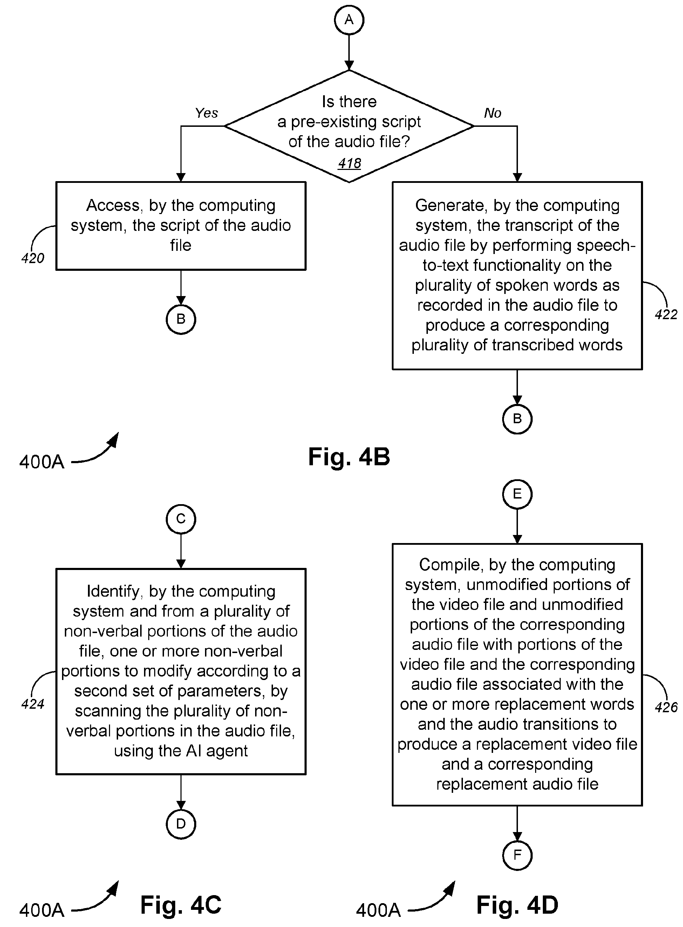

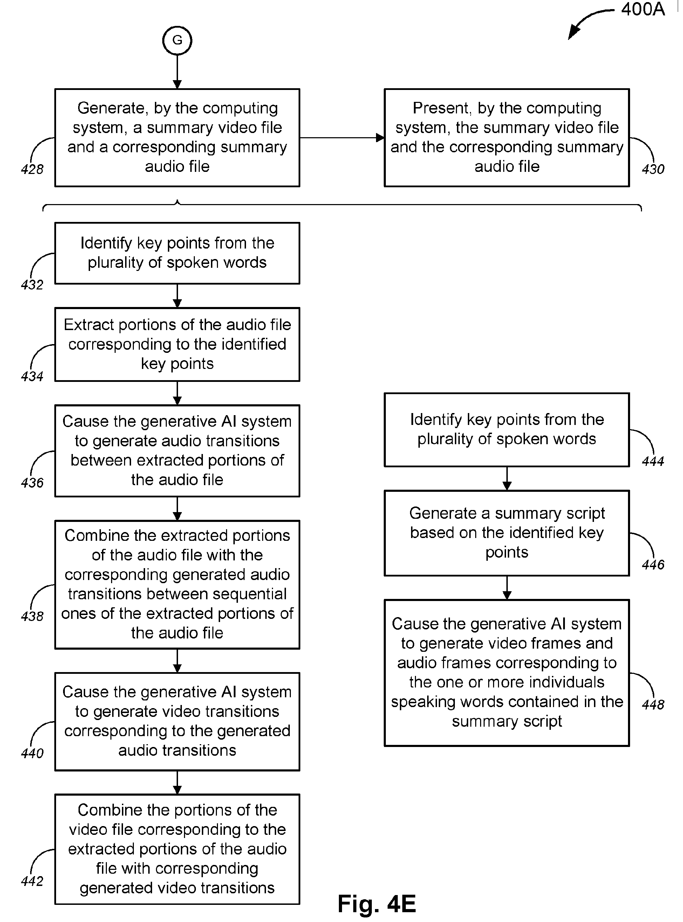

Figs. 4A-4F depict example methods 400A and 400B for implementing post-production AI enhancement of video presentations based on script modification. With reference to Figs. 4A-4F, the operations of example methods 400A and 400B may be performed by a server or cloud-based system (e.g., server 164 of Fig. 1) or components thereof including a computing system (e.g., computing system 104, 104a, 104b, 205, or 305 of Figs. 1-3) and/or an AI system(s) (e.g., AI system(s) 122a or 122b of Fig. 1). Method 400A of Fig. 4A continues onto Fig. 4B following the circular marker denoted, "A," and returns to Fig. 4A following the circular marker denoted, "B." Method 400A of Fig. 4A continues onto Fig. 4C following the circular marker denoted, "C," and returns to Fig. 4A following the circular marker denoted, "D." Method 400A of Fig. 4A continues onto Fig. 4D following the circular marker denoted, "E," and returns to Fig. 4A following the circular marker denoted, "F." Method 400A of Fig. 4A continues onto Fig. 4E following the circular marker denoted, "G."

In the example method 400A of Fig. 4A, at operation 402, a computing system accesses a video file (e.g., video file(s) 116a-116x, 146a-146y, 158a-158z, 215, and/or 315 of Figs. 1-3) and a corresponding audio file (e.g., audio file(s) 118a-118x, 148a-148y, 160a-160z, 220, and/or 325 of Figs. 1-3) of one or more individuals (e.g., individuals 112a-112n of Fig. 1) speaking. In examples, the video file and the corresponding audio file correspond to prior recordings of one of a lecture, a presentation, a social media video, a podcast, a movie, a television show, a concert, a theater play, an opera production, an awards show, a game show, a cooking show, a video game cut scene, a sporting event, or a training video. In some examples, accessing the video file and the corresponding audio file (at operation 402) includes one of retrieving the video file and the corresponding audio file from a storage device (e.g., retrieving video file(s) 116a-116x and audio file(s) 118a-118x from data store 120 in user device(s) 102 of Fig. 1), accessing the video file and the corresponding audio file from a CDN (e.g., retrieving video file(s) 146a-146y and audio file(s) 148a-148y from CDN 140 in network(s) 142a of Fig. 1), or accessing the video file and the corresponding audio file from a cloud service system (e.g., retrieving video file(s) 158a-158z and audio file(s) 160a-160z from database(s) 156 in network(s) 142b of Fig. 1). In examples, the computing system includes one of a smart phone, a tablet computer, a desktop computer, a server, or a cloud resource. In some cases, the computing system includes one or more NPUs, one or more GPUs, and/or one or more CPUs, where the AI agent is run using the one or more NPUs, the one or more GPUs, and/or the one or more CPUs, whether in whole or in part. Method 400A either continues onto the process at operation 404 or continues onto the process at operation 418 in Fig. 4B following the circular marker denoted, "A," before returning to the process at operation 404 in Fig. 4A following the circular marker denoted, "B."

At operation 404, the computing system identifies, from a plurality of spoken words as recorded in the audio file, one or more spoken words to modify according to a first set of parameters, in some cases, by scanning the plurality of spoken words in the audio file, using an AI agent (e.g., AI agent(s) 126 of Fig. 1). In examples, the plurality of spoken words is scanned, based on one of a script or a transcript (e.g., script(s)/transcript(s) 136a-136x or 162a-162z of Fig. 1 or script(s) 240 of Fig. 2) of the audio file, to identify the one or more spoken words to modify. Method 400A either continues onto the process at operation 406 or continues onto the process at operation 424 in Fig. 4C following the circular marker denoted, "C," before returning to the process at operation 406 in Fig. 4A following the circular marker denoted, "D."

At operation 406, the computing system causes generation of one or more replacement portions of the video file and the corresponding audio file, in some cases, by: (a) causing a generative AI system (e.g., AI system(s) 122a or 122b of Fig. 1) to modify one of the script or the transcript of the audio file to replace the identified one or more spoken words with corresponding one or more replacement words (at operation 408); (b) causing the generative AI system to modify one or more portions of the audio file containing the identified one or more spoken words to replace the identified one or more spoken words with the one or more replacement words, based on the modified one of the script or the transcript (at operation 410); (c) causing the generative AI system to modify one or more portions of the audio file containing the identified one or more spoken words to generate audio transitions to ensure smooth transition before and after the one or more replacement words are incorporated in the audio file (at operation 412); and (d) causing the generative AI system to modify corresponding portions of the video file to match the one or more replacement words and the audio transitions (at operation 414). In examples, the one or more replacement words include words retrieved from one of an Internet search or a database search of general information regarding a topic of discussion associated with the plurality of spoken words. In some cases, causing the generative AI system to modify the corresponding portions of the video file (at operation 414) includes causing the generative AI system to generate replacement video frames to match the one or more replacement words and the audio transitions, in some cases, using a video rendering system.

In some examples, identifying the one or more spoken words to modify (at operation 404) is further based on a profile of the intended audience (e.g., profile(s) 134a-134t, 245, or 340 of Figs. 1-3), and the generative AI system is caused to modify the one of the script or the transcript of the audio file to replace the identified one or more spoken words with the corresponding one or more replacement words, based on the profile of the intended audience. In some examples, the profile of the intended audience includes information regarding at least one of age, spoken languages, region of birth, region of residence, ethnicity, cultural background, religion, education level, college major, speech samples and corresponding speech sample metadata of the user, or video samples and corresponding video sample metadata of the user. Method 400A either continues onto the process at operation 416 or continues onto the process at operation 426 in Fig. 4D following the circular marker denoted, "E," before returning to the process at operation 416 in Fig. 4A following the circular marker denoted, "F." At operation 416, the computing system presents the one or more replacement portions of the video file and the corresponding audio file associated with the one or more replacement words and the audio transitions. Method 400A continues onto the process at operation 428 in Fig. 4E following the circular marker denoted, "G."

At operation 418 in Fig. 4B (following the circular marker denoted, "A," in Fig. 4A), method 400A may include the computing system determining whether there is a pre-existing script of the audio file. Based on a determination that there is a pre-existing script of the audio file, method 400A continues onto the process at operation 420, at which the computing system accesses the script of the audio file, in some cases, from a database(s) (e.g., data store 120 or database(s) 156 of Fig. 1). Method 400A returns to the process at operation 404 in Fig. 4A following the circular marker denoted, "B." In such examples, identifying the one or more spoken words to modify (at operation 404) includes identifying the one or more spoken words to modify based on differences between the plurality of spoken words as recorded in the audio file with corresponding words contained in the script of the audio file, and according to the first set of parameters. Alternatively, based on a determination that the audio file does not have a pre-existing script, method 400A continues onto the process at operation 422, at which the computing system generates the transcript of the audio file, in some cases, by performing speech-to-text functionality on the plurality of spoken words as recorded in the audio file to produce a corresponding plurality of transcribed words. Method 400A returns to the process at operation 404 in Fig. 4A following the circular marker denoted, "B." In such examples, identifying the one or more spoken words to modify (at operation 404) includes identifying the one or more spoken words to modify by scanning the plurality of transcribed words, according to the first set of parameters and based on the profile of the intended audience. In examples, the first set of parameters include parameters associated with replacing or removing designated words. In some examples, the designated words include at least one of filler words, personal words, personal phrases, colloquial terms, mumbled words, mispronounced words, misused words, misspoken words, offensive words, insensitive words, or inappropriate words. In some cases, the parameters associated with replacing or removing the designated words are based on the profile of the intended audience.

At operation 424 in Fig. 4C (following the circular marker denoted, "C," in Fig. 4A), method 400A may include the computing system identifying, from a plurality of non-verbal portions of the audio file, one or more non-verbal portions to modify according to a second set of parameters, in some cases, by scanning the plurality of non-verbal portions in the audio file, using the AI agent. In examples, the second set of parameters include at least one of parameters associated with removing verbal pauses having a duration exceeding a threshold duration (e.g., 5, 10, or 15 s, or greater), parameters associated with filtering out background noise, or parameters associated with audio feedback. Method 400A returns to the process at operation 406 in Fig. 4A following the circular marker denoted, "D."

At operation 426 in Fig. 4D (following the circular marker denoted, "E," in Fig. 4A), method 400A may include the computing system compiling unmodified portions of the video file and unmodified portions of the corresponding audio file with portions of the video file and the corresponding audio file associated with the one or more replacement words and the audio transitions to produce a replacement video file and a corresponding replacement audio file. Method 400A returns to the process at operation 416 in Fig. 4A following the circular marker denoted, "F." In such examples, presenting the one or more replacement portions of the video file and the corresponding audio file (at operation 416) includes presenting the replacement video file and the corresponding replacement audio file.

At operation 428 in Fig. 4E (following the circular marker denoted, "G," in Fig. 4A), method 400A may include the computing system generating a summary video file and a corresponding summary audio file. At operation 430, the computing system presents the summary video file and the corresponding summary audio file. In an example, generating the summary video file and the corresponding summary audio file (at operation 428) includes identifying key points from the plurality of spoken words (e.g., a summary of a speech, an inferred meaning derived from the speech, emphasized words or particular phrases from the speech, or other points of note from the speech) (at operation 432); extracting portions of the audio file corresponding to the identified key points (at operation 434); causing the generative AI system to generate audio transitions between extracted portions of the audio file (at operation 436); combining the extracted portions of the audio file with the corresponding generated audio transitions between sequential ones of the extracted portions of the audio file (at operation 438); causing the generative AI system to generate video transitions corresponding to the generated audio transitions to ensure smooth transition between portions of the video file corresponding to the extracted portions of the audio file (at operation 440); and combining the portions of the video file corresponding to the extracted portions of the audio file with corresponding generated video transitions between sequential ones of the portions of the video file (at operation 442). Alternatively, in another example, generating the summary video file and the corresponding summary audio file (at operation 428) includes identifying key points from the plurality of spoken words (at operation 444); generating a summary script based on the identified key points (at operation 446); and causing the generative AI system to generate video frames and audio frames corresponding to the one or more individuals speaking words contained in the summary script (at operation 448).

Referring to the example method 400B of Fig. 4F, at operation 450, the computing system accesses a video file and a corresponding audio file of one or more individuals speaking. At operation 452, the computing system identifies key points from a plurality of spoken words as recorded in the audio file. At operation 454, the computing system generates a summary script based on the identified key points. At operation 456, the computing system generates a summary video file and a corresponding summary audio file. At operation 458, the computing system presents the summary video file and the corresponding summary audio file. In some examples, generating the summary video file and the corresponding summary audio file (at operation 456) includes causing the generative AI system to generate video frames and audio frames corresponding to the one or more individuals speaking words contained in the summary script (at operation 460). In examples, the generative AI system is caused to generate the video frames and the audio frames based on a plurality of samples of video portions and audio portions of each of the one or more individuals speaking. Alternatively or additionally, the generative AI system is caused to generate the video frames and the audio frames further based on the profile of the intended audience. Alternatively or additionally, causing the generative AI system to generate the video frames and the audio frames corresponding to the one or more individuals speaking words contained in the summary script (at operation 460) includes: generating a prompt that includes the summary script, the plurality of samples of video portions and audio portions of each of the one or more individuals speaking, and the profile of the intended audience (at operation 462); sending the prompt as input to the generative AI system (at operation 464); and receiving the video frames and the audio frames as output from the generative AI system (at operation 466).

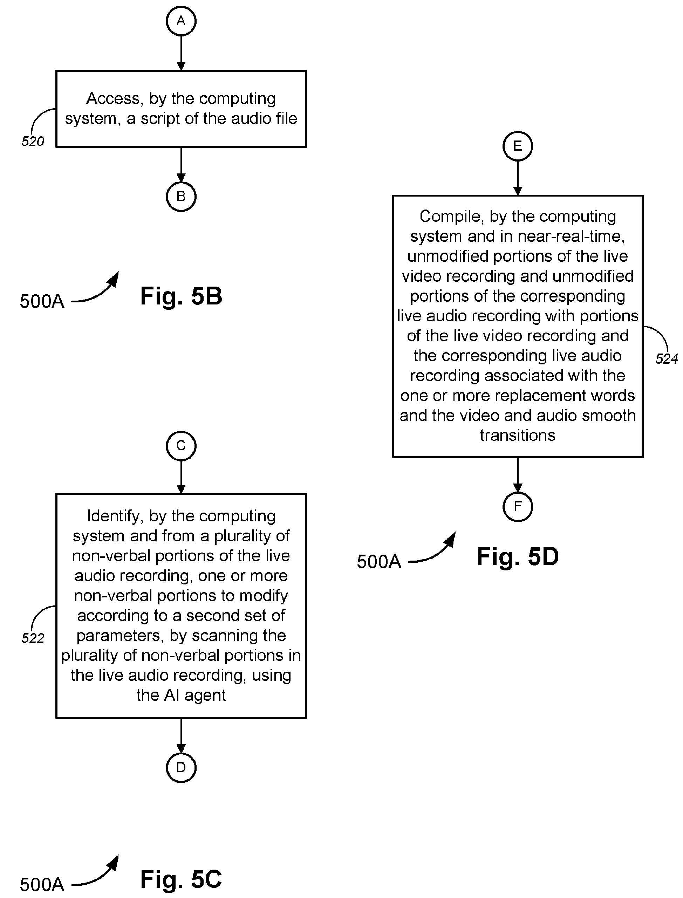

Figs. 5A-5E depict example methods 500A and 500B for implementing near-real-time AI enhancement of video or AR presentations of live events. Referring to Figs. 5A-5E, the operations of example methods 500A and 500B may be performed by a server or cloud-based system (e.g., server 164 of Fig. 1) or components thereof including a computing system (e.g., computing system 104, 104a, 104b, 205, or 305 of Figs. 1-3) and/or an AI system(s) (e.g., AI system(s) 122a or 122b of Fig. 1). Method 500A of Fig. 5A continues onto Fig. 5B following the circular marker denoted, "A," and returns to Fig. 5A following the circular marker denoted, "B." Method 500A of Fig. 5A continues onto Fig. 5C following the circular marker denoted, "C," and returns to Fig. 5A following the circular marker denoted, "D." Method 500A of Fig. 5A continues onto Fig. 5D following the circular marker denoted, "E," and returns to Fig. 5A following the circular marker denoted, "F."

In the example method 500A of Fig. 5A, at operation 502, a computing system scans, in near-real-time, a live video recording (e.g., video file(s) 116a-116x, 146a-146y, 158a-158z, 215, and/or 315 of Figs. 1-3) and a corresponding live audio recording (e.g., live audio recording(s) 118a-118x, 148a-148y, 160a-160z, 220, and/or 325 of Figs. 1-3) of one or more individuals (e.g., individuals 112a-112n of Fig. 1) speaking, using an AI agent (e.g., AI agent(s) 126 of Fig. 1). In examples, the live video recording and the corresponding live audio recording correspond to one of a live lecture, a live presentation, a live showing of a social media video, a live presentation of a podcast, a live showing of a movie, a live showing of a television show, a live concert, a live theater play, a live opera production, a live awards show, a live game show, a live cooking show, a live showing of a runtime video game cut scene, a live stream of a cloud-based game, a live sporting event, or a live training video. In some examples, the live video recording and the corresponding live audio recording (at operation 502) are accessed from one of an image capture device, a video recording device, or a buffer memory (e.g., image or video capture device(s) 108 of Fig. 1, camera(s) 320 of Fig. 3, or buffer memory of either of these devices). In examples, the live video recording and the corresponding live audio recording, as originally recorded, are stored as ground truth for future reference. In some examples, the computing system includes one of a set of augmented reality AR eyewear with at least one connected audio output device, a smart phone, a tablet computer, or a video recording device. In some cases, the computing system includes one or more NPUs, one or more GPUs, and/or one or more CPUs, where the AI agent is run using the one or more NPUs, the one or more GPUs, and/or the one or more CPUs. Method 500A either continues onto the process at operation 504 or continues onto the process at operation 520 in Fig. 5B following the circular marker denoted, "A," before returning to the process at operation 504 in Fig. 5A following the circular marker denoted, "B."

At operation 504, the computing system identifies, from a plurality of spoken words as scanned from the live audio recording, one or more spoken words to modify according to a first set of parameters, in some cases, based on a profile of a user (e.g., profile(s) 134a-134t, 245, or 340 of Figs. 1-3) and/or using an AI agent (e.g., AI agent(s) 126 of Fig. 1). In some examples, the profile of the user includes information regarding at least one of age, spoken languages, region of birth, region of residence, ethnicity, cultural background, religion, education level, college major, speech samples and corresponding speech sample metadata of the user, or video samples and corresponding video sample metadata of the user. Method 500A either continues onto the process at operation 506 or continues onto the process at operation 522 in Fig. 5C following the circular marker denoted, "C," before returning to the process at operation 506 in Fig. 5A following the circular marker denoted, "D."

At operation 506, the computing system causes near-real-time generation of one or more replacement portions of the live video recording and the corresponding live audio recording. In an example, causing near-real-time generation of one or more replacement portions of the live video recording and the corresponding live audio recording includes causing a generative AI system (e.g., AI system(s) 122a or 122b of Fig. 1) to: (1) modify, in near-real-time, the identified one or more spoken words with corresponding one or more replacement words in each of the live video recording and the corresponding live audio recording, in some cases, based on the profile of the user (at operation 508); and (2) modify, in near-real-time, one or more portions of each of the live video recording and the corresponding live audio recording to generate video and audio smooth transitions before and after the one or more replacement words are incorporated in the live video recording and the corresponding live audio recording, respectively (at operation 510). Alternatively, in another example, causing near-real-time generation of one or more replacement portions of the live video recording and the corresponding live audio recording includes causing the generative AI system to: (A) modify, in near-real-time, the identified one or more spoken words with the corresponding one or more replacement words in the live audio recording, based on the profile of the user (at operation 512); (B) modify, in near-real-time, the one or more portions of the live audio recording to generate the audio smooth transitions before and after the one or more replacement words are incorporated in the live audio recording (at operation 514); and (C) generate, in near-real-time, replacement video frames to match the one or more replacement words in the live audio recording and the audio smooth transitions, in some cases, using a video rendering system. In examples, the one or more replacement words include words retrieved from one of an Internet search or a database search of general information regarding a topic of discussion associated with the plurality of spoken words. In some examples, replaced portions of the live video recording can include updated closed captioning text that is updated to use the near-real-time generation of replacement text to improve the speech-to-text recognition as well as modified as described herein (e.g., to fix or omit errors, to remove utterances like "uh," to correct mispronunciations, to update data or facts to be consistent with current understanding and latest information, to display translated words, or other modifications).

Method 500A either continues onto the process at operation 518 or continues onto the process at operation 524 in Fig. 5D following the circular marker denoted, "E," before returning to the process at operation 518 in Fig. 5A following the circular marker denoted, "F." At operation 518, the computing system presents, in near-real-time, the one or more replacement portions of the live video recording and the corresponding live audio recording associated with the one or more replacement words and the video and audio smooth transitions.

At operation 520 in Fig. 5B (following the circular marker denoted, "A," in Fig. 5A), method 500A may include the computing system accessing a script of the live audio recording, in some cases, from a database(s) (e.g., data store 120 or database(s) 156 of Fig. 1). Method 500A returns to the process at operation 504 in Fig. 5A following the circular marker denoted, "B." In such examples, identifying the one or more spoken words to modify (at operation 504) includes identifying the one or more spoken words to modify based on differences between the plurality of spoken words as scanned from the live audio recording with corresponding words contained in the script of the live audio recording, and according to the first set of parameters. In examples, the first set of parameters include parameters associated with replacing or removing designated words. In some examples, the designated words include at least one of filler words, personal words, personal phrases, colloquial terms, mumbled words, mispronounced words, misused words, misspoken words, offensive words, insensitive words, or inappropriate words. In some cases, the parameters associated with replacing or removing the designated words are based on the profile of the user.

At operation 522 in Fig. 5C (following the circular marker denoted, "C," in Fig. 5A), method 500A may include the computing system identifying, from a plurality of non-verbal portions of the live audio recording, one or more non-verbal portions to modify according to a second set of parameters, in some cases, by scanning the plurality of non-verbal portions in the live audio recording, using the AI agent. In examples, the second set of parameters include at least one of parameters associated with filtering out background noise or parameters associated with audio feedback. Method 500A returns to the process at operation 506 in Fig. 5A following the circular marker denoted, "D."

At operation 524 in Fig. 5D (following the circular marker denoted, "E," in Fig. 5A), method 500A may include the computing system compiling, in near-real-time, unmodified portions of the live video recording and unmodified portions of the corresponding live audio recording with portions of the live video recording and the corresponding live audio recording associated with the one or more replacement words and the video and audio smooth transitions, in some cases, to produce a replacement live video recording and a corresponding replacement live audio recording. Method 500A returns to the process at operation 518 in Fig. 5A following the circular marker denoted, "F." In such examples, presenting the one or more replacement portions of the live video recording and the corresponding live audio recording (at operation 518) includes presenting the replacement live video recording and the corresponding replacement live audio recording.

Referring to the example method 500B of Fig. 5E, at operation 526, the computing system scans, in near-real-time, the live video recording and the corresponding live audio recording of one or more individuals speaking, using the AI agent. In some examples, the live video recording and the corresponding live audio recording correspond to near-real-time language translation scenarios in which at least one of the one or more individuals are speaking in at least one language that is different from any of the spoken languages as indicated in the information of the profile of the user. In examples, the near-real-time language translation scenarios include one of a gathering of representatives from a plurality of sovereign nations, a collaboration involving international members, an interaction involving international members, a meeting involving international members, a tourist visit to a country where a different language is spoken, a viewing of a social media video in which a social media influencer is speaking in a different language, a viewing of a podcast in which a podcaster is speaking in a different language, a viewing of a movie or television show in which characters are speaking in a different language, an attendance at an opera production or a play in which characters are speaking in a different language, an attendance at a concert in which musical artists are singing in a different language, an attendance at a course being instructed in a different language, or an attendance at a presentation being presented in a different language.

At operation 528, the computing system determines whether the plurality of spoken words spoken by the one or more individuals includes words spoken in at least one other language that is different from any spoken languages as indicated in information of the profile of the user. Based on a determination that there are words spoken in a different language in the live audio recording, the computing system identifies, from the plurality of spoken words as scanned from the live audio recording, one or more other language words for replacement (at operation 530). In some examples, the one or more other language words are identified based on language analysis of the plurality of spoken words, using the AI agent.

At operation 532, the computing system causes the generative AI system to replace, in near-real-time, the identified one or more other language words with corresponding one or more translated words in the live audio recording, the one or more translated words being in one of the spoken languages as indicated in the information of the profile of the user. At operation 534, the computing system causes the generative AI system to modify, in near-real-time, one or more portions of the live audio recording to generate audio smooth transitions before and after the one or more translated words are incorporated in the live audio recording. At operation 536, the computing system causes the generative AI system to combine, in near-real-time, the one or more translated words and the audio smooth transitions to produce replacement audio portions. At operation 538, the computing system causes the generative AI system to generate, in near-real-time, replacement video frames to match the one or more translated words replacing the identified one or more other language words in the live audio recording and the audio smooth transitions, in some cases, using a video rendering system. In some cases, the replacement video frames include rendering of lips of the one or more individuals to match the one or more translated words. At operation 540, the computing system presents, in near-real-time, the replacement video frames and the corresponding replacement audio portions.

In some examples, at operation 542, the computing system compiles, in near-real-time, unmodified portions of the live video recording and unmodified portions of the corresponding live audio recording with portions of the live video recording and the corresponding live audio recording associated with the one or more translated words and the audio smooth transitions to produce combined replacement video and audio portions. At operation 544, the computing system presents, in near-real-time, the combined replacement video and audio portions.

While the techniques and procedures in methods 400, 500 are depicted and/or described in a certain order for purposes of illustration, it should be appreciated that certain procedures may be reordered and/or omitted within the scope of various embodiments. Moreover, while the methods 400, 500 may be implemented by or with (and, in some cases, are described below with respect to) the systems, examples, or embodiments 100, 200, and 300 of Figs. 1, 2, and 3, respectively (or components thereof), such methods may also be implemented using any suitable hardware (or software) implementation. Similarly, while each of the systems, examples, or embodiments 100, 200, and 300 of Figs. 1, 2, and 3, respectively (or components thereof), can operate according to the methods 400, 500 (e.g., by executing instructions embodied on a computer readable medium), the systems, examples, or embodiments 100, 200, and 300 of Figs. 1, 2, and 3 can each also operate according to other modes of operation and/or perform other suitable procedures.

As should be appreciated from the foregoing, the present technology provides multiple technical benefits and solutions to technical problems. For instance, recording video and audio of individuals who are speaking generally raises technical problems. For instance, one technical problem includes existing systems capturing audio and video as accurately and with the highest fidelity possible in accordance with an "exact copy" model, which, in practice, incorporate filler words, personalized words or phrases, colloquial terms, etc. as part of the recordings. Filtering or removal of such filler words, personalized words or phrases, colloquial terms, etc. require the use of specialized tools needing skilled technicians.

The present technology provides for post-production AI enhancement of video presentations based on script modification and/or near-real-time AI enhancement of video or AR presentations of live events. In the post-production implementation, a computing system identifies one or more spoken words to modify, from a plurality of spoken words in an audio file of individuals speaking, based on a set of parameters and/or a profile of an intended audience, in some cases, using an AI agent. If there is a script or transcript for the audio file, the computing system causes a generative AI system to modify the script or transcript to replace the identified one or more spoken words with one or more replacement words, and to modify corresponding portions of the audio file to replace the identified one or more spoken words with the one or more replacement words based on the modified script or transcript. The computing system further causes the generative AI system to generate audio transitions before and after the one or more replacement words, and to modify the applicable portions of a corresponding video file based on the modified audio file, resulting in enhanced video and audio files, which are subsequently presented to an intended audience. In the manner above, post-production systems can be improved in terms of audio/video editing. Reduced misunderstandings or error rate can also be achieved, which increasing user interaction performance (in some cases, improvement in speech-to-text and/or text-to-speech functionalities).

In the near-real-time implementation, the computing system identifies one or more spoken words to modify, from a plurality of spoken words in a live audio recording of individuals speaking, based on a set of parameters and/or a profile of a user, in some cases, using the AI agent. The computing system causes the generative AI system to modify, in near-real-time, (a) the identified one or more spoken words with corresponding one or more replacement words in each of the live video recording and the corresponding live audio recording, based on the profile of the user; (b) portions of the live video recording and the corresponding live audio recording to generate video and audio smooth transitions before and after the one or more replacement words are incorporated in the live video recording and the corresponding live audio recording, respectively. The modified video recording and corresponding modified audio recording are presented, in near-real-time, to the user. In the manner above, near-real-time modification of audio and video can be achieved, resulting in near-instantaneous or live translations of languages, near-instantaneous or live filtering of filler words, personalized words or phrases, colloquial terms, etc., and/or near-instantaneous or live correction of inaccurate or misleading information by a speaker (e.g., instant fact-checking), which improves upon the technical field of live presentation/broadcast systems.

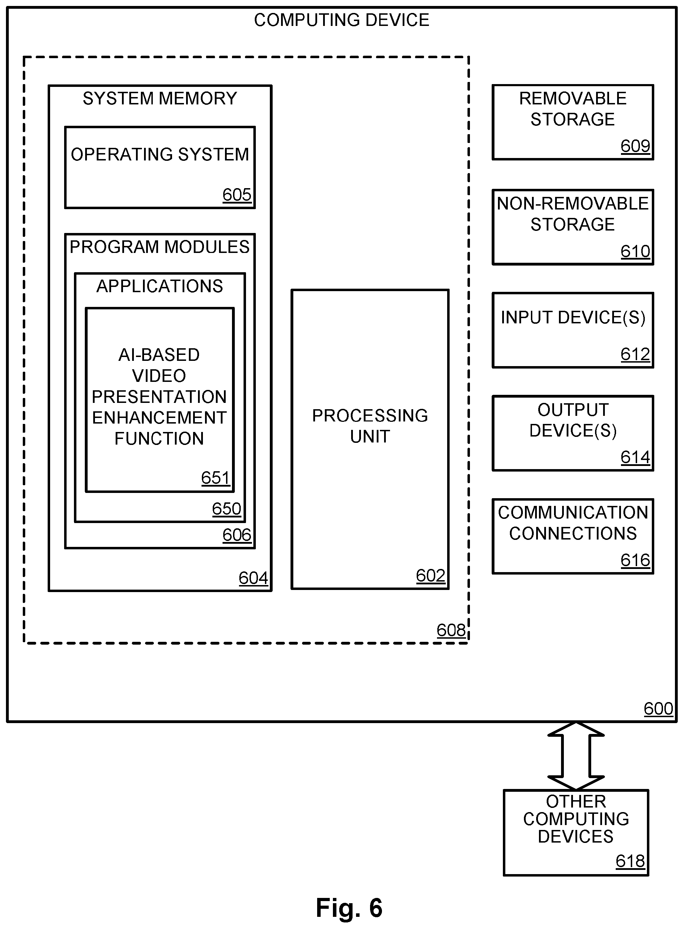

Fig. 6 depicts a block diagram illustrating physical components (i.e., hardware) of a computing device 600 with which examples of the present disclosure may be practiced. The computing device components described below may be suitable for a client device implementing the post-production AI enhancement of video presentations based on script modification and/or near-real-time AI enhancement of video or AR presentations of live events, as discussed above. In a basic configuration, the computing device 600 may include at least one processing unit 602 and a system memory 604. The processing unit(s) (e.g., processors) may be referred to as a processing system. Depending on the configuration and type of computing device, the system memory 604 may include volatile storage (e.g., random access memory), non-volatile storage (e.g., read-only memory), flash memory, or any combination of such memories. The system memory 604 may include an operating system 605 and one or more program modules 606 suitable for running software applications 650, such as AI-based video presentation enhancement function 651, to implement one or more of the systems or methods described above.

The operating system 605, for example, may be suitable for controlling the operation of the computing device 600. Furthermore, aspects of the invention may be practiced in conjunction with a graphics library, other operating systems, or any other application program and is not limited to any particular application or system. This basic configuration is illustrated in Fig. 6 by those components within a dashed line 608. The computing device 600 may have additional features or functionalities. For example, the computing device 600 may also include additional data storage devices (which may be removable and/or non-removable), such as, for example, magnetic disks, optical disks, or tape. Such additional storage is illustrated in Fig. 6 by a removable storage device(s) 609 and a non-removable storage device(s) 610.

As stated above, a number of program modules and data files may be stored in the system memory 604. While executing on the processing unit 602, the program modules 606 may perform processes including one or more of the operations of the method(s) as illustrated in Figs. 4A-5E, or one or more operations of the system(s) and/or apparatus(es) as described with respect to Figs. 1-3, or the like. Other program modules that may be used in accordance with examples of the present disclosure may include applications such as electronic mail and contacts applications, word processing applications, spreadsheet applications, database applications, slide presentation applications, drawing or computer-aided application programs, AI applications and machine learning ("ML") modules on cloud-based systems, etc.

Furthermore, examples of the present disclosure may be practiced in an electrical circuit including discrete electronic elements, packaged or integrated electronic chips containing logic gates, a circuit utilizing a microprocessor, or on a single chip containing electronic elements or microprocessors. For example, examples of the present disclosure may be practiced via a system-on-a-chip ("SOC") where each or many of the components illustrated in Fig. 6 may be integrated onto a single integrated circuit. Such an SOC device may include one or more processing units, graphics units, communications units, system virtualization units and various application functionalities all of which may be integrated (or "burned") onto the chip substrate as a single integrated circuit. When operating via an SOC, the functionality, described herein, with respect to generating suggested queries, may be operated via application-specific logic integrated with other components of the computing device 600 on the single integrated circuit (or chip). Examples of the present disclosure may also be practiced using other technologies capable of performing logical operations such as, for example, AND, OR, and NOT, including mechanical, optical, fluidic, and/or quantum technologies.

The computing device 600 may also have one or more input devices 612 such as a keyboard, a mouse, a pen, a sound input device, and/or a touch input device, etc. The output device(s) 614 such as a display, speakers, and/or a printer, etc. may also be included. The aforementioned devices are examples and others may be used. The computing device 600 may include one or more communication connections 616 allowing communications with other computing devices 618. Examples of suitable communication connections 616 include radio frequency ("RF") transmitter, receiver, and/or transceiver circuitry; universal serial bus ("USB"), parallel, and/or serial ports; and/or the like.

The term "computer readable media" as used herein may include computer storage media. Computer storage media may include volatile and nonvolatile, and/or removable and non-removable, media that may be implemented in any method or technology for storage of information, such as computer readable instructions, data structures, or program modules. The system memory 604, the removable storage device 609, and the non-removable storage device 610 are all computer storage media examples (i.e., memory storage). Computer storage media may include random access memory ("RAM"), read-only memory ("ROM"), electrically erasable programmable read-only memory ("EEPROM"), flash memory or other memory technology, compact disk read-only memory ("CD-ROM"), digital versatile disks ("DVD") or other optical storage, magnetic cassettes, magnetic tape, magnetic disk storage or other magnetic storage devices, or any other article of manufacture which can be used to store information and which can be accessed by the computing device 600. Any such computer storage media may be part of the computing device 600. Computer storage media may be non-transitory and tangible, and computer storage media do not include a carrier wave or other propagated data signal.

Communication media may be embodied by computer readable instructions, data structures, program modules, or other data in a modulated data signal, such as a carrier wave or other transport mechanism, and may include any information delivery media. The term "modulated data signal" may describe a signal that has one or more characteristics that are set or changed in such a manner as to encode information in the signal. By way of example, communication media may include wired media such as a wired network or direct-wired connection, and wireless media such as acoustic, RF, infrared, and other wireless media.

Alternatively or in addition to the other examples described herein, examples include the following:
Clause A. A system, comprising a processing system; and memory comprising computer executable instructions that, when executed by the processing system, causes the system to perform operations comprising scanning, using an artificial intelligence ("AI") agent and in near-real-time, a live video recording and a corresponding live audio recording of one or more individuals speaking; identifying, from a plurality of spoken words as scanned from the live audio recording, one or more spoken words to modify according to a first set of parameters and based on a profile of a user, using the AI agent; causing near-real-time generation of one or more replacement portions of the live video recording and the corresponding live audio recording, by causing a generative AI system to modify, in near-real-time, the identified one or more spoken words with corresponding one or more replacement words in each of the live video recording and the corresponding live audio recording, based on the profile of the user; and causing the generative AI system to modify, in near-real-time, one or more portions of each of the live video recording and the corresponding live audio recording to generate video and audio smooth transitions before and after the one or more replacement words are incorporated in the live video recording and the corresponding live audio recording, respectively; and presenting, in near-real-time, the one or more replacement portions of the live video recording and the corresponding live audio recording associated with the one or more replacement words and the video and audio smooth transitions.
Clause B. The system of Clause A, wherein causing the generative AI system to modify, in near-real-time, the identified one or more spoken words with the corresponding one or more replacement words in each of the live video recording and the corresponding live audio recording and causing the generative AI system to modify, in near-real-time, the one or more portions of each of the live video recording and the corresponding live audio recording to generate video and audio smooth transitions comprise causing the generative AI system to modify, in near-real-time, the identified one or more spoken words with the corresponding one or more replacement words in the live audio recording, based on the profile of the user; modify, in near-real-time, the one or more portions of the live audio recording to generate the audio smooth transitions before and after the one or more replacement words are incorporated in the live audio recording; and generate, in near-real-time, replacement video frames to match the one or more replacement words in the live audio recording and the audio smooth transitions, using a video rendering system.
Clause C. The system of Clause A, wherein the system comprises one of a set of augmented reality ("AR") eyewear with at least one connected audio output device, a smart phone, a tablet computer, or a video recording device, wherein the processing system comprises one or more neural processing units ("NPUs"), graphics processing units ("GPUs"), and/or central processing units ("CPUs"), wherein the AI agent is run using the one or more NPUs, the one or more GPUs, and/or the one or more CPUs.
Clause D. The system of Clause A, wherein the live video recording and the corresponding live audio recording correspond to one of a live lecture, a live presentation, a live showing of a social media video, a live presentation of a podcast, a live showing of a movie, a live showing of a television show, a live concert, a live theater play, a live opera production, a live awards show, a live game show, a live cooking show, a live showing of a runtime video game cut scene, a live stream of a cloud-based game, a live sporting event, or a live training video.
Clause E. The system of Clause A, wherein the profile of the user includes information regarding at least one of age, spoken languages, region of birth, region of residence, ethnicity, cultural background, religion, education level, college major, speech samples and corresponding speech sample metadata of the user, or video samples and corresponding video sample metadata of the user.
Clause F. The system of Clause E, wherein the live video recording and the corresponding live audio recording correspond to near-real-time language translation scenarios in which at least one of the one or more individuals are speaking in at least one language that is different from any of the spoken languages as indicated in the information of the profile of the user, wherein the near-real-time language translation scenarios include one of a gathering of representatives from a plurality of sovereign nations, a collaboration involving international members, an interaction involving international members, a meeting involving international members, a tourist visit to a country where a different language is spoken, a viewing of a social media video in which a social media influencer is speaking in a different language, a viewing of a podcast in which a podcaster is speaking in a different language, a viewing of a movie or television show in which characters are speaking in a different language, an attendance at an opera production or a play in which characters are speaking in a different language, an attendance at a concert in which musical artists are singing in a different language, an attendance at a course being instructed in a different language, or an attendance at a presentation being presented in a different language.
Clause G. The system of Clause F, wherein identifying the one or more spoken words to modify comprises identifying one or more other language words for replacement, by determining that the plurality of spoken words spoken by the one or more individuals includes words spoken in at least one other language that is different from any of the spoken languages as indicated in the information of the profile of the user and by identifying the one or more other language words based on language analysis of the plurality of spoken words, using the AI agent; wherein the one or more replacement words include one or more translated words in one of the spoken languages as indicated in the information of the profile of the user, wherein causing the near-real-time generation of the one or more replacement portions of the live video recording and the corresponding live audio recording comprises replacing, in near-real-time, the identified one or more other language words with the corresponding one or more translated words in the live audio recording; modifying, in near-real-time, the one or more portions of the live audio recording to generate the audio smooth transitions before and after the one or more translated words are incorporated in the live audio recording and to combine the one or more translated words and the audio smooth transitions to produce replacement audio portions; and generating, in near-real-time, replacement video frames to match the one or more translated words replacing the identified one or more other language words in the live audio recording and the audio smooth transitions, using a video rendering system, the replacement video frames including rendering of lips of the one or more individuals to match the one or more translated words; and wherein the operations further comprise presenting, in near-real-time, the replacement video frames and the corresponding replacement audio portions.
Clause H. The system of Clause A, wherein the operations further comprise compiling, in near-real-time, unmodified portions of the live video recording and unmodified portions of the corresponding live audio recording with portions of the live video recording and the corresponding live audio recording associated with the one or more replacement words and the video and audio smooth transitions.
Clause I. The system of Clause A, wherein the operations further comprise accessing a script of the live audio recording; wherein identifying the one or more spoken words to modify includes identifying the one or more spoken words to modify based on differences between the plurality of spoken words as scanned from the live audio recording with corresponding words contained in the script of the live audio recording, and according to the first set of parameters.
Clause J. The system of Clause A, wherein the first set of parameters include parameters associated with replacing or removing designated words, wherein the designated words include at least one of filler words, personal words, personal phrases, colloquial terms, mumbled words, mispronounced words, misused words, misspoken words, offensive words, insensitive words, or inappropriate words, wherein the parameters associated with replacing or removing the designated words are based on the profile of the user.
Clause K. The system of Clause A, wherein the one or more replacement words include words retrieved from one of an Internet search or a database search of general information regarding a topic of discussion associated with the plurality of spoken words.
Clause L. The system of Clause A, wherein the operations further comprise identifying, from a plurality of non-verbal portions of the live audio recording, one or more non-verbal portions to modify according to a second set of parameters, by scanning the plurality of non-verbal portions in the live audio recording, using the AI agent; wherein the second set of parameters include at least one of parameters associated with filtering out background noise or parameters associated with audio feedback.
Clause M. The system of Clause A, wherein the live video recording and the corresponding live audio recording are accessed from one of an image capture device, a video recording device, or a buffer memory.
Clause N. The system of Clause A, wherein the live video recording and the corresponding live audio recording, as originally recorded, are stored as ground truth for future reference.
Clause O. A computer-implemented method, comprising scanning, by a computing system and in near-real-time, a live video recording and a corresponding live audio recording of one or more individuals speaking, using an artificial intelligence ("AI") agent; identifying, by the computing system and from a plurality of spoken words as scanned from the live audio recording, one or more spoken words to modify according to a first set of parameters and based on a profile of a user, using the AI agent; causing, by the computing system, near-real-time generation of one or more replacement portions of the live video recording and the corresponding live audio recording, by causing a generative AI system to modify, in near-real-time, the identified one or more spoken words with corresponding one or more replacement words in each of the live video recording and the corresponding live audio recording, based on the profile of the user; and causing the generative AI system to modify, in near-real-time, one or more portions of each of the live video recording and the corresponding live audio recording to generate video and audio smooth transitions before and after the one or more replacement words are incorporated in the live video recording and the corresponding live audio recording, respectively; and presenting, by the computing system and in near-real-time, the one or more replacement portions of the live video recording and the corresponding live audio recording associated with the one or more replacement words and the video and audio smooth transitions.
Clause P. A system, comprising a processing system; and memory comprising computer executable instructions that, when executed by the processing system, causes the system to perform operations comprising scanning, using an artificial intelligence ("AI") agent and in near-real-time, a live video recording and a corresponding live audio recording of one or more individuals speaking; identifying, from a plurality of spoken words as scanned from the live audio recording, one or more other language words for replacement, by determining that the plurality of spoken words spoken by the one or more individuals includes words spoken in at least one other language that is different from any spoken languages as indicated in information of a profile of a user and by identifying the one or more other language words based on language analysis of the plurality of spoken words, using the AI agent; causing near-real-time generation of one or more replacement portions of the live video recording and the corresponding live audio recording, by causing a generative AI system to replace, in near-real-time, the identified one or more other language words with corresponding one or more translated words in the live audio recording, the one or more translated words being in one of the spoken languages as indicated in the information of the profile of the user; causing the generative AI system to modify, in near-real-time, one or more portions of the live audio recording to generate audio smooth transitions before and after the one or more translated words are incorporated in the live audio recording and to combine the one or more translated words and the audio smooth transitions to produce replacement audio portions; and generating, in near-real-time, replacement video frames to match the one or more translated words replacing the identified one or more other language words in the live audio recording and the audio smooth transitions, using a video rendering system, the replacement video frames including rendering of lips of the one or more individuals to match the one or more translated words; and presenting, in near-real-time, the replacement video frames and the corresponding replacement audio portions.
Clause Q. The system of Clause P, wherein the live video recording and the corresponding live audio recording correspond to near-real-time language translation scenarios in which at least one of the one or more individuals are speaking in at least one language that is different from any of the spoken languages as indicated in the information of the profile of the user, wherein the near-real-time language translation scenarios include one of a gathering of representatives from a plurality of sovereign nations, a collaboration involving international members, an interaction involving international members, a meeting involving international members, a tourist visit to a country where a different language is spoken, a viewing of a social media video in which a social media influencer is speaking in a different language, a viewing of a podcast in which a podcaster is speaking in a different language, a viewing of a movie or television show in which characters are speaking in a different language, an attendance at an opera production or a play in which characters are speaking in a different language, an attendance at a concert in which musical artists are singing in a different language, an attendance at a course being instructed in a different language, or an attendance at a presentation being presented in a different language.
Clause R. The system of Clause P, wherein the profile of the user further includes information regarding at least one of age, region of birth, region of residence, ethnicity, cultural background, religion, education level, college major, speech samples and corresponding speech sample metadata of the user, or video samples and corresponding video sample metadata of the user.
Clause S. The system of Clause P, wherein the operations further comprise compiling, in near-real-time, unmodified portions of the live video recording and unmodified portions of the corresponding live audio recording with portions of the live video recording and the corresponding live audio recording associated with the one or more translated words and the audio smooth transitions to produce combined replacement video and audio portions; and presenting, in near-real-time, the combined replacement video and audio portions.
Clause T. The system of Clause P, wherein the system comprises one of a set of augmented reality ("AR") eyewear with at least one connected audio output device, a smart phone, a tablet computer, or a video recording device, wherein the processing system comprises one or more neural processing units ("NPUs"), graphics processing units ("GPUs"), and/or central processing units ("CPUs"), wherein the AI agent is run using the one or more NPUs, the one or more GPUs, and/or the one or more CPUs.

Systems and methods are provided for implementing near-real-time artificial intelligence ("AI") enhancement of video or augmented reality ("AR") presentations of live events. In examples, a computing system identifies, from a plurality of spoken words in a live audio recording of individuals speaking, spoken words to modify, based on a set of parameters and/or a profile of a user, using an AI agent. The computing system causes a generative AI system to modify, in near-real-time, (a) the identified spoken words with corresponding replacement words in each of the live video recording and the corresponding live audio recording, based on the profile of the user; (b) portions of the live video recording and the corresponding live audio recording to generate video and audio smooth transitions before and after the replacement words are incorporated in the live video recording and the corresponding live audio recording, respectively.

In this detailed description, wherever possible, the same reference numbers are used in the drawing and the detailed description to refer to the same or similar elements. In some instances, a sub-label is associated with a reference numeral to denote one of multiple similar components. When reference is made to a reference numeral without specification to an existing sub-label, it is intended to refer to all such multiple similar components. In some cases, for denoting a plurality of components, the suffixes "a" through "n" may be used, where n denotes any suitable non-negative integer number (unless it denotes the number 14, if there are components with reference numerals having suffixes "a" through "m" preceding the component with the reference numeral having a suffix "n"), and may be either the same or different from the suffix "n" for other components in the same or different figures. For example, for component #1 X05a-X05n, the integer value of *n* in X05n may be the same or different from the integer value of *n* in X10n for component #2 X10a-X10n, and so on. In other cases, other suffixes (e.g., *s, t, u,* v, w, *x, y,* and/or z) may similarly denote non-negative integer numbers that (together with n or other like suffixes) may be either all the same as each other, all different from each other, or some combination of same and different (e.g., one set of two or more having the same values with the others having different values, a plurality of sets of two or more having the same value with the others having different values).

Unless otherwise indicated, all numbers used herein to express quantities, dimensions, and so forth used should be understood as being modified in all instances by the term "about." In this application, the use of the singular includes the plural unless specifically stated otherwise, and use of the terms "and" and "or" means "and/or" unless otherwise indicated. Moreover, the use of the term "including," as well as other forms, such as "includes" and "included," should be considered non-exclusive. Also, terms such as "element" or "component" encompass both elements and components including one unit and elements and components that include more than one unit, unless specifically stated otherwise.

In this detailed description, for the purposes of explanation, numerous specific details are set forth to provide a thorough understanding of the described embodiments. It will be apparent to one skilled in the art, however, that other embodiments of the present invention may be practiced without some of these specific details. In other instances, certain structures and devices are shown in block diagram form. While aspects of the technology may be described, modifications, adaptations, and other implementations are possible. For example, substitutions, additions, or modifications may be made to the elements illustrated in the drawings, and the methods described herein may be modified by substituting, reordering, or adding stages to the disclosed methods. Accordingly, the detailed description does not limit the technology, but instead, the proper scope of the technology is defined by the appended claims. Examples may take the form of a hardware implementation, or an entirely software implementation, or an implementation combining software and hardware aspects. Several embodiments are described herein, and while various features are ascribed to different embodiments, it should be appreciated that the features described with respect to one embodiment may be incorporated with other embodiments as well. By the same token, however, no single feature or features of any described embodiment should be considered essential to every embodiment of the invention, as other embodiments of the invention may omit such features. The detailed description is, therefore, not to be taken in a limiting sense.

Aspects of the present invention, for example, are described above with reference to block diagrams and/or operational illustrations of methods, systems, and computer program products according to aspects of the invention. The functions and/or acts noted in the blocks may occur out of the order as shown in any flowchart. For example, two blocks shown in succession may in fact be executed substantially concurrently or the blocks may sometimes be executed in the reverse order, depending upon the functionalities and/or acts involved. Further, as used herein and in the claims, the phrase "at least one of element A, element B, or element C" (or any suitable number of elements) is intended to convey any of: element A, element B, element C, elements A and B, elements A and C, elements B and C, and/or elements A, B, and C (and so on).

The description and illustration of one or more aspects provided in this application are not intended to limit or restrict the scope of the invention as claimed in any way. The aspects, examples, and details provided in this application are considered sufficient to convey possession and enable others to make and use the best mode of the claimed invention. The claimed invention should not be construed as being limited to any aspect, example, or detail provided in this application. Regardless of whether shown and described in combination or separately, the various features (both structural and methodological) are intended to be selectively rearranged, included, or omitted to produce an example or embodiment with a particular set of features. Having been provided with the description and illustration of the present application, one skilled in the art may envision variations, modifications, and alternate aspects, examples, and/or similar embodiments falling within the spirit of the broader aspects of the general inventive concept embodied in this application that do not depart from the broader scope of the claimed invention.

## Claims

1. A system (100), comprising:
a processing system (602) ; and
memory (604) comprising computer executable instructions that, when executed by the processing system, causes the system to perform operations comprising:
scanning (502), using an artificial intelligence ("AI") agent and in near-real-time, a live video recording and a corresponding live audio recording of one or more individuals speaking;
identifying (504), from a plurality of spoken words as scanned from the live audio recording, one or more spoken words to modify according to a first set of parameters and based on a profile of a user, using the AI agent;
causing (506) near-real-time generation of one or more replacement portions of the live video recording and the corresponding live audio recording, by:
causing a generative AI system to modify (508), in near-real-time, the identified one or more spoken words with corresponding one or more replacement words in each of the live video recording and the corresponding live audio recording, based on the profile of the user; and
causing the generative AI system to modify (510), in near-real-time, one or more portions of each of the live video recording and the corresponding live audio recording to generate video and audio smooth transitions before and after the one or more replacement words are incorporated in the live video recording and the corresponding live audio recording, respectively; and
presenting (518), in near-real-time, the one or more replacement portions of the live video recording and the corresponding live audio recording associated with the one or more replacement words and the video and audio smooth transitions.

2. The system of claim 1, wherein causing the generative AI system to modify, in near-real-time, the identified one or more spoken words with the corresponding one or more replacement words in each of the live video recording and the corresponding live audio recording and causing the generative AI system to modify, in near-real-time, the one or more portions of each of the live video recording and the corresponding live audio recording to generate video and audio smooth transitions comprise causing the generative AI system to:
modify, in near-real-time, the identified one or more spoken words with the corresponding one or more replacement words in the live audio recording, based on the profile of the user;
modify, in near-real-time, the one or more portions of the live audio recording to generate the audio smooth transitions before and after the one or more replacement words are incorporated in the live audio recording; and
generate, in near-real-time, replacement video frames to match the one or more replacement words in the live audio recording and the audio smooth transitions, using a video rendering system.

3. The system of claim 1, wherein the system comprises one of a set of augmented reality ("AR") eyewear with at least one connected audio output device, a smart phone, a tablet computer, or a video recording device, wherein the processing system comprises one or more neural processing units ("NPUs"), graphics processing units ("GPUs"), and/or central processing units ("CPUs"), wherein the AI agent is run using the one or more NPUs, the one or more GPUs, and/or the one or more CPUs.

4. The system of claim 1, wherein the live video recording and the corresponding live audio recording correspond to one of a live lecture, a live presentation, a live showing of a social media video, a live presentation of a podcast, a live showing of a movie, a live showing of a television show, a live concert, a live theater play, a live opera production, a live awards show, a live game show, a live cooking show, a live showing of a runtime video game cut scene, a live stream of a cloud-based game, a live sporting event, or a live training video.

5. The system of claim 1, wherein the profile of the user includes information regarding at least one of age, spoken languages, region of birth, region of residence, ethnicity, cultural background, religion, education level, college major, speech samples and corresponding speech sample metadata of the user, or video samples and corresponding video sample metadata of the user.

6. The system of claim 5, wherein the live video recording and the corresponding live audio recording correspond to near-real-time language translation scenarios in which at least one of the one or more individuals are speaking in at least one language that is different from any of the spoken languages as indicated in the information of the profile of the user, wherein the near-real-time language translation scenarios include one of a gathering of representatives from a plurality of sovereign nations, a collaboration involving international members, an interaction involving international members, a meeting involving international members, a tourist visit to a country where a different language is spoken, a viewing of a social media video in which a social media influencer is speaking in a different language, a viewing of a podcast in which a podcaster is speaking in a different language, a viewing of a movie or television show in which characters are speaking in a different language, an attendance at an opera production or a play in which characters are speaking in a different language, an attendance at a concert in which musical artists are singing in a different language, an attendance at a course being instructed in a different language, or an attendance at a presentation being presented in a different language.

7. The system of claim 6,
wherein identifying the one or more spoken words to modify comprises:
identifying one or more other language words for replacement, by determining that the plurality of spoken words spoken by the one or more individuals includes words spoken in at least one other language that is different from any of the spoken languages as indicated in the information of the profile of the user and by identifying the one or more other language words based on language analysis of the plurality of spoken words, using the AI agent;
wherein the one or more replacement words include one or more translated words in one of the spoken languages as indicated in the information of the profile of the user, wherein causing the near-real-time generation of the one or more replacement portions of the live video recording and the corresponding live audio recording comprises:
replacing, in near-real-time, the identified one or more other language words with the corresponding one or more translated words in the live audio recording;
modifying, in near-real-time, the one or more portions of the live audio recording to generate the audio smooth transitions before and after the one or more translated words are incorporated in the live audio recording and to combine the one or more translated words and the audio smooth transitions to produce replacement audio portions; and
generating, in near-real-time, replacement video frames to match the one or more translated words replacing the identified one or more other language words in the live audio recording and the audio smooth transitions, using a video rendering system, the replacement video frames including rendering of lips of the one or more individuals to match the one or more translated words; and
wherein the operations further comprise:
presenting, in near-real-time, the replacement video frames and the corresponding replacement audio portions.

8. The system of claim 1, wherein the operations further comprise:
compiling, in near-real-time, unmodified portions of the live video recording and unmodified portions of the corresponding live audio recording with portions of the live video recording and the corresponding live audio recording associated with the one or more replacement words and the video and audio smooth transitions.

9. The system of claim 1, wherein the operations further comprise:
accessing a script of the live audio recording;
wherein identifying the one or more spoken words to modify includes:
identifying the one or more spoken words to modify based on differences between the plurality of spoken words as scanned from the live audio recording with corresponding words contained in the script of the live audio recording, and according to the first set of parameters.

10. The system of claim 1, wherein the first set of parameters include parameters associated with replacing or removing designated words, wherein the designated words include at least one of filler words, personal words, personal phrases, colloquial terms, mumbled words, mispronounced words, misused words, misspoken words, offensive words, insensitive words, or inappropriate words, wherein the parameters associated with replacing or removing the designated words are based on the profile of the user.

11. The system of claim 1, wherein the one or more replacement words include words retrieved from one of an Internet search or a database search of general information regarding a topic of discussion associated with the plurality of spoken words.

12. The system of claim 1, wherein the operations further comprise:
identifying, from a plurality of non-verbal portions of the live audio recording, one or more non-verbal portions to modify according to a second set of parameters, by scanning the plurality of non-verbal portions in the live audio recording, using the AI agent;
wherein the second set of parameters include at least one of parameters associated with filtering out background noise or parameters associated with audio feedback.

13. The system of claim 1, wherein the live video recording and the corresponding live audio recording are accessed from one of an image capture device, a video recording device, or a buffer memory.

14. A computer-implemented method (500A), comprising:
scanning (502), by a computing system and in near-real-time, a live video recording and a corresponding live audio recording of one or more individuals speaking, using an artificial intelligence ("AI") agent;
identifying (504), by the computing system and from a plurality of spoken words as scanned from the live audio recording, one or more spoken words to modify according to a first set of parameters and based on a profile of a user, using the AI agent;
causing (506), by the computing system, near-real-time generation of one or more replacement portions of the live video recording and the corresponding live audio recording, by:
causing a generative AI system to modify (508), in near-real-time, the identified one or more spoken words with corresponding one or more replacement words in each of the live video recording and the corresponding live audio recording, based on the profile of the user; and
causing the generative AI system to modify (510), in near-real-time, one or more portions of each of the live video recording and the corresponding live audio recording to generate video and audio smooth transitions before and after the one or more replacement words are incorporated in the live video recording and the corresponding live audio recording, respectively; and
presenting (518), by the computing system and in near-real-time, the one or more replacement portions of the live video recording and the corresponding live audio recording associated with the one or more replacement words and the video and audio smooth transitions.

15. A system (100), comprising:
a processing system (602); and
memory (604) comprising computer executable instructions that, when executed by the processing system, causes the system to perform operations comprising:
scanning (502), using an artificial intelligence ("AI") agent and in near-real-time, a live video recording and a corresponding live audio recording of one or more individuals speaking;
identifying (504), from a plurality of spoken words as scanned from the live audio recording, one or more other language words for replacement, by determining that the plurality of spoken words spoken by the one or more individuals includes words spoken in at least one other language that is different from any spoken languages as indicated in information of a profile of a user and by identifying the one or more other language words based on language analysis of the plurality of spoken words, using the AI agent;
causing (506) near-real-time generation of one or more replacement portions of the live video recording and the corresponding live audio recording, by:
causing (508) a generative AI system to replace, in near-real-time, the identified one or more other language words with corresponding one or more translated words in the live audio recording, the one or more translated words being in one of the spoken languages as indicated in the information of the profile of the user;
causing (510) the generative AI system to modify, in near-real-time, one or more portions of the live audio recording to generate audio smooth transitions before and after the one or more translated words are incorporated in the live audio recording and to combine the one or more translated words and the audio smooth transitions to produce replacement audio portions; and
generating (516), in near-real-time, replacement video frames to match the one or more translated words replacing the identified one or more other language words in the live audio recording and the audio smooth transitions, using a video rendering system, the replacement video frames including rendering of lips of the one or more individuals to match the one or more translated words; and
presenting (518), in near-real-time, the replacement video frames and the corresponding replacement audio portions.
